(19) Europäisches Patentamt / European Patent Office / Office européen des brevets

(11) **EP 3 489 508 B1**

(12) **EUROPEAN PATENT SPECIFICATION**

(45) Date of publication and mention
of the grant of the patent:
**08.06.2022 Bulletin 2022/23**

(21) Application number: **17830459.8**

(22) Date of filing: **18.07.2017**

(51) International Patent Classification (IPC):
**F03D 7/02** (2006.01)  **F03D 7/04** (2006.01)
**F03D 17/00** (2016.01)

(52) Cooperative Patent Classification (CPC):
**F03D 17/00; F03D 7/0204;** F05B 2270/321;
F05B 2270/329; F05B 2270/335; F05B 2270/802;
Y02E 10/72

(86) International application number:
**PCT/CN2017/093303**

(87) International publication number:
**WO 2018/014825 (25.01.2018 Gazette 2018/04)**

(54) **METHOD AND DEVICE FOR AUTOMATICALLY CALIBRATING WIND ALIGNMENT ERROR OF WIND POWER GENERATION UNIT**

VERFAHREN UND VORRICHTUNG ZUR AUTOMATISCHEN KALIBRIERUNG EINES
WINDAUSRICHTUNGSFEHLERS EINER WINDENERGIEERZEUGUNGSEINHEIT

PROCÉDÉ ET DISPOSITIF POUR ÉTALONNER AUTOMATIQUEMENT L'ERREUR D'ALIGNEMENT
AU VENT D'UNE UNITÉ DE PRODUCTION D'ÉNERGIE ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.07.2016 CN 201610579606**

(43) Date of publication of application:
**29.05.2019 Bulletin 2019/22**

(73) Proprietor: **Zhejiang Windey Co., Ltd.**
**Zhejiang 311106 (CN)**

(72) Inventors:
• **YE, Hangye**
**Hangzhou**
**Zhejiang 310012 (CN)**
• **PAN, Donghao**
**Hangzhou**
**Zhejiang 310012 (CN)**
• **WANG, Xin**
**Hangzhou**
**Zhejiang 310012 (CN)**
• **YING, You**
**Hangzhou**
**Zhejiang 310012 (CN)**

(74) Representative: **V.O.**
**P.O. Box 87930**
**Carnegieplein 5**
**2508 DH Den Haag (NL)**

(56) References cited:
| EP-A1- 3 250 821 | WO-A1-2015/077337 |
| WO-A1-2016/086778 | CN-A- 103 675 356 |
| CN-A- 104 747 368 | CN-A- 104 989 592 |
| CN-A- 105 257 470 | CN-A- 105 259 374 |
| CN-A- 106 014 858 | US-A1- 2010 066 087 |
| US-A1- 2011 101 691 | US-A1- 2014 199 156 |
| US-A1- 2015 152 846 | |

## Description

## FIELD

The present application claims priority to Chinese Patent Application No. 201610579606.4, titled "METHOD AND DEVICE FOR AUTOMATICALLY CALIBRATING WIND ALIGNMENT ERROR OF WIND POWER GENERATOR SET", filed with the Chinese Patent Office on July 21, 2016.

## BACKGROUND

Recently, a problem of inaccuracy of wind measurement performed by a wind vane at the rear of a nacelle in a wind power industry attracts more and more attentions. Many factors, such as an improper calibrating method used when installing the wind vane, an operation error of an operator and maintainer, and disturbance caused by an extreme condition such as typhoon, may cause an absolute zero position of the wind vane to be not parallel to the centerline of the nacelle, therefore, a yaw system has an "inherent wind alignment error", which results in that an output power of a generator set cannot meet design requirements.

WO2016086778A1 discloses a method for controlling wind alignment correction of a wind turbine generator system. The system comprises: acquiring environmental wind speed values, yawing wind alignment angle measured values, and generated power values of the wind turbine generator system in real time; dividing each acquired environmental wind speed value into multiple wind speed sections according to the magnitude of the environmental wind speed value, and extracting yawing wind alignment angle measured values and generated power values in at least one wind speed section; determining a maximum value of extracted generated power values in each wind speed section; calculating a wind alignment correction deviation of the wind turbine generator system according to a yawing wind alignment angle measured value corresponding to the maximum value of the extracted generated power values in each wind speed section; and performing correction processing on a subsequently acquired yawing wind alignment angle measured value by using the wind alignment correction deviation. The control method implements a wind alignment correction control operation on the wind turbine generator system, and also improves correction efficiency. WO2016086778A1 further relates to a device and a system that are related to the foregoing method.

## SUMMARY

In view of this, a method and a device for automatically calibrating a wind alignment error of a wind power generator set are provided in the present disclosure, to solve the problem in the conventional art that many factors cause an absolute zero position of the wind vane to be not parallel to the centerline of the nacelle, and a yaw system has an "inherent wind alignment error", which results in that an output power of a generator set cannot meet design requirements. The technical solutions are described as follows.

A method for automatically calibrating a wind alignment error of a wind power generator set is provided. The method includes:

acquiring historical operation data of a target generator set within a preset time period;

removing abnormal data from the historical operation data of the target generator set to acquire target data;

performing a dimensionality reduction process on the target data, and determining a curve representing a relationship between a wind alignment error and an output performance based on the data obtained by the dimensionality reduction process, wherein the performing a dimensionality reduction process on the target data, and determining a curve representing a relationship between a wind alignment error and an output performance based on the data obtained by the dimensionality reduction process comprises:

performing probability statistics on the wind alignment error in the target data, and determining a target wind alignment error range based on a result of the probability statistics;

removing data, which has a wind alignment error out of the target wind alignment error range, from the target data to acquire first target data;

determining a wind power curve corresponding to each wind alignment error based on the first target data, wherein the wind power curve is a curve representing a relationship between a wind speed and an active power; and

processing the wind power curve into the curve representing the relationship between the wind alignment error and the output performance,

wherein the processing the wind power curve into the curve representing the relationship between the wind alignment error and the output performance comprises:

performing an integral process on each of wind power curves corresponding to different wind alignment errors, to acquire a quantized value of the output performance, and

acquiring the curve representing a relationship between the wind alignment error and output performance;

determining an inherent wind alignment error based on the curve representing the relationship between the wind alignment error and the output performance, wherein the inherent wind alignment error represents an angle between a zero position of a wind vane and a centerline of a nacelle; and

correcting a zero position parameter of a yaw system of the target generator set based on the inherent wind alignment error.

The removing abnormal data from the historical operation data of the target generator set includes: performing a clustering process on the historical operation data, and removing the abnormal data based on a clustering result of the clustering process.

The performing a clustering process on the historical operation data includes:

standardizing the historical operation data to acquire target historical operation data;

determining a target noise data proportion $\varepsilon$-noise based on the number of data objects in the target historical operation data;

calculating a geometric distance between each of the data objects and a target object in the target historical operation data to acquire a distance set, where the target object is a data object in the target historical operation data which has the k-th geometric distance in an ascending order of geometric distances between a data object and the data objects, where an initial value of k is 2;

performing probability statistics on elements in the distance set, and grouping the elements in the distance set, which have probability values within a preset probability range, into a new distance set;

determining a mathematical expectation value of the new distance set as a value of a parameter $Eps_k$ of a DBSCAN clustering algorithm;

determining the number of points in an $Eps_k$ neighborhood of each of the data objects in the target historical operation data, to acquire a number set;

performing probability statistics on elements in the number set, and grouping the elements in the number set, which have probability values within a preset probability range, into a new number set;

determining a mathematical expectation value of the new number set as a value of a parameter $Minpts_k$ of the DBSCAN clustering algorithm;

performing a DBSCAN clustering process on the target historical operation data with the parameters $Minpts_k$ and $Eps_k$;

calculating a current noise data proportion Ratio-noisek based on a clustering result of the DBSCAN clustering process;

ending the clustering process, in a case that k>2 and Ratio-noisek meets $|Ratio\text{-}noise_{k-1} - Ratio\text{-}noise_k| \leq \varepsilon\text{-}noise$; and

assigning k+1 to k, and then turning to perform the step of calculating a geometric distance between each of the data objects and a target object in the target historical operation data, in a case that k does not meet k>2 and/or Ratio-noisek does not meet $|Ratio\text{-}noise_{k-1} - Ratio\text{-}noise_k| \leq \varepsilon\text{-}noise$.

The method further includes:

acquiring before-correction operation data of the target generator set before the correcting is performed and after-correction operation data of the target generator set after the correcting is performed;

dividing each of the before-correction operation data and the after-correction operation data into two sets according to a rated wind speed;

removing abnormal data from the two sets of the before-correction operation data, and merging the two sets of the before-correction operation data in which the abnormal data is removed, to acquire target before-correction operation data; and removing abnormal data from the two sets of the after-correction operation data, and merging the two sets of the after-correction operation data in which the abnormal data is removed, to acquire target after-correction operation data;

fitting a wind power curve to each of the target before-correction operation data and the target after-correction operation data, and performing linear interpolation on the wind power curve with respect to a wind speed in each of the target before-correction operation data and the target after-correction operation data, to acquire a theoretical active power corresponding to each wind speed;

calculating a power deviation between an actual active power and the theoretical active power of each data point in each of the target before-correction operation data and the target after-correction operation data, to acquire the power deviation corresponding to each data point;

performing probability statistics on the power deviations corresponding to data points;

removing the data points, which have probability densities out of a preset range, based on a result of the probability statistics, and turning to perform the step of dividing each of the before-correction operation data and the after-correction operation data into two sets according to a rated wind speed, until the fitted wind power curve no longer changes;

converting the wind power curve before the correcting is performed into a quantized value of the output performance before the correcting is performed by performing an integral process on the wind power curve before the correcting is performed, and converting the wind power curve after the correcting is performed to a quantized value of the output performance after the correcting is performed by performing an integral process on the wind power curve after the correcting is performed; and

comparing the quantitative value of the output performance before the correcting is performed with the quantitative value of the output performance after the correcting is performed, to acquire a change from the output performance of the target generator set before the correcting is performed to the output performance of the target generator set after the correcting is performed.

A device for automatically calibrating a wind alignment error of a wind power generator set is provided. The device includes:

a data acquiring module, configured to acquire historical operation data of a target generator set within a preset time period;

a data removing module, configured to remove abnormal data from the historical operation data acquired by the data acquiring module, to acquire target data;

a dimensionality reduction process module, configured to perform a dimensionality reduction process on the target data obtained by the data removing module after the abnormal data is removed;
wherein the dimensionality reduction process module comprises:

a probability statistics submodule, configured to perform probability statistics on the wind alignment error in the target data, and determine a target wind alignment error range based on a result of the probability statistics;

a data removing submodule, configured to remove data, which has a wind alignment error out of the target wind alignment error range, from the target data to acquire first target data;

a curve determining module, configured to determine a curve representing a relationship between a wind alignment error and an output performance based on the data obtained by the dimensionality reduction process module after the dimensionality reduction process is performed;
wherein the curve determining module comprises:

a first curve determining submodule, configured to determine a wind power curve corresponding to each wind alignment error based on the first target data, wherein the wind power curve is a curve representing a relationship between a wind speed and an active power; and

a second curve determining submodule, configured to process the wind power curve into the curve representing the relationship between the wind alignment error and the output performance,
wherein the second curve determining submodule is further configured to:

perform an integral process on each of wind power curves corresponding to different wind alignment errors, to acquire a quantized value of the output performance, and acquire the curve representing a relationship between the wind alignment error and output performance;

an inherent wind alignment error determining module, configured to determine an inherent wind alignment error based on the curve representing the relationship between the wind alignment error and the output performance determined by the curve determining module, wherein the inherent wind alignment error represents an angle between a zero position of a wind vane and a centerline of a nacelle; and

a correcting module, configured to correct a zero position parameter of a yaw system of the target generator set based on the inherent wind alignment error determined by the inherent wind alignment error determining module.

The data removing module includes:

a clustering module, configured to perform a clustering process on the historical operation data, to acquire a clustering result; and

a removing module, configured to remove the abnormal data based on the clustering result of the clustering process.

The device further includes:

a data acquiring submodule, configured to acquire before-correction operation data of the target generator set before the correcting is performed and after-correction operation data of the target generator set after the correcting is performed;

a data dividing submodule, configured to divide each of the before-correction operation data and the after-correction operation data into two sets according to a rated wind speed;

an abnormal data removing submodule, configured to remove abnormal data from the two sets of the before-correction operation data and to remove abnormal data from the two sets of the after-correction operation data;

a data merging submodule, configured to merge the two sets of the before-correction operation data in which the abnormal data is removed, to acquire target before-correction operation data and to merge the two sets of the after-correction operation data in which the abnormal data is removed, to acquire target after-correction operation data;

a data fitting submodule, configured to fit a wind power curve to each of the target before-correction operation data and the target after-correction operation data;

a data interpolating submodule, configured to perform linear interpolation on the wind power curve with respect to a wind speed in each of the target before-correction operation data and the target after-correction operation data, to acquire a theoretical active power corresponding to each wind speed; and

a power deviation calculating submodule, configured to calculate a power deviation between an actual active power and the theoretical active power of each data point in each of the target before-correction operation data and the target after-correction operation data, to acquire the power deviation corresponding to each data point.

The abnormal data removing submodule is further configured to: perform probability statistics on the power deviations corresponding to data points; remove the data points, which have probability densities out of a preset range, based on a result of the probability statistics, to acquire new before-correction operation data and new after-correction operation data; and then trigger the data dividing submodule to divide the before-correction operation data into two sets according to a rated wind speed, until the fitted wind power curve no longer changes.

The evaluating module further includes:

a wind power curve processing submodule, configured to convert the wind power curve before the correcting is performed into a quantized value of the output performance before the correcting is performed by performing an integral process on the wind power curve before the correcting is performed, and to convert the wind power curve after the correcting is performed to a quantized value of the output performance after the correcting is performed by performing an integral process on the wind power curve after the correcting is performed; and

a comparing submodule, configured to compare the quantitative value of the output performance before the correcting is performed with the quantitative value of the output performance after the correcting is performed, to acquire a change from the output performance of the target generator set before the correcting is performed to the output performance of the target generator set after the correcting is performed.

The above technical solutions have the following beneficial effects. According to the method and the device for automatically calibrating the wind alignment error of the wind power generator set provided by the present disclosure. The historical operation data of the wind power generator set is fully utilized. The inherent wind alignment error of the yaw system of the wind power generator set is automatically identified by performing data mining and analysis on the historical operation data of the wind power generator set. Furthermore, the zero position parameter of the yaw control system is automatically adjusted based on the inherent wind alignment error, thereby enhancing the self-adaptive capability of the yaw system of the generator set, and improving the actual output performance of the generator set, so that the output power of the generator set can meet design requirements.

**BRIEF DESCRIPTION OF THE DRAWINGS**

In order to more clearly illustrate embodiments of the present disclosure or technical solutions in the conventional technology, the drawing referred to describe the embodiments or the conventional technology will be briefly described hereinafter. Apparently, the drawings in the following description show only embodiments of the present disclosure, and for those skilled in the art, other drawings may be acquired based on the provided drawing without any creative efforts.

Figure 1 is a schematic diagram of a relationship between an actual wind direction and a nacelle position in a case that there is an inherent wind alignment error.

Figure 2 is a schematic flowchart of a method for automatically calibrating a wind alignment error of a wind power generator set according to an embodiment of the present disclosure;

Figure 3 is a schematic flowchart of a method for automatically calibrating a wind alignment error of a wind power generator set according to another embodiment of the present disclosure;

Figure 4 is a schematic flowchart of an implementation manner of performing a clustering process on the historical operation data in the method for automatically calibrating a wind alignment error of a wind power generator set according to an embodiment of the present disclosure;

Figure 5 shows a scatter diagram of the historical operation data before the clustering process is performed, and a scatter diagram of the historical operation data after the clustering process is performed on the historical operation data with an improved DBSCAN clustering algorithm to remove abnormal data;

Figure 6 is a schematic flowchart of an implementation manner of performing a dimensionality reduction process on the target data and determining a curve representing a relationship between a wind alignment error and an output performance based on the data obtained by the dimensionality reduction process, in the method for automatically calibrating a wind alignment error of a wind power generator set according to an embodiment of the present disclosure;

Figure 7 is a schematic diagram of probability statistics of wind alignment errors and a target wind alignment error range according to an embodiment of the present disclosure;

Figure 8 shows wind power curves with different wind alignment errors according to an embodiment of the present disclosure;

Figure 9 shows a curve representing a relationship between the wind alignment error and the output performance according to an embodiment of the present disclosure;

Figure 10 is a schematic diagram of the power deviation between an actual active power and a theoretical active power of each data point according to an embodiment of the present disclosure;

Figure 11 is a schematic diagram of a statistical result of the power deviation for each of a case that a wind speed is less than a rated wind speed and a case that the wind speed is greater than the rated wind speed according to an embodiment of the present disclosure;

Figure 12 is a diagram shows comparison between the wind power curve of the generator set before the correcting is performed and the wind power curve of the generator set after the correcting is performed according to an embodiment of the present disclosure;

Figure 13 is an evaluation result diagram of the output performances of the target generator set before the correcting is performed and the output performances of the target generator set after the correcting is performed according to an embodiment of the present disclosure; and

Figure 14 is a schematic structural diagram of a device for automatically calibrating a wind alignment error of a wind power generator set according to an embodiment of the present disclosure.

## DETAILED DESCRIPTION OF EMBODIMENTS

Technical solutions of embodiments of the present disclosure are clearly and completely described hereinafter in conjunction with the drawings of the embodiments of the present disclosure. It is apparent that the embodiments described in the following are only some embodiments of the present disclosure, rather than all embodiments. Based on the embodiments in the present disclosure, all of other embodiments, made by those skilled in the art without any creative efforts, fall into the scope of protection of the present disclosure.

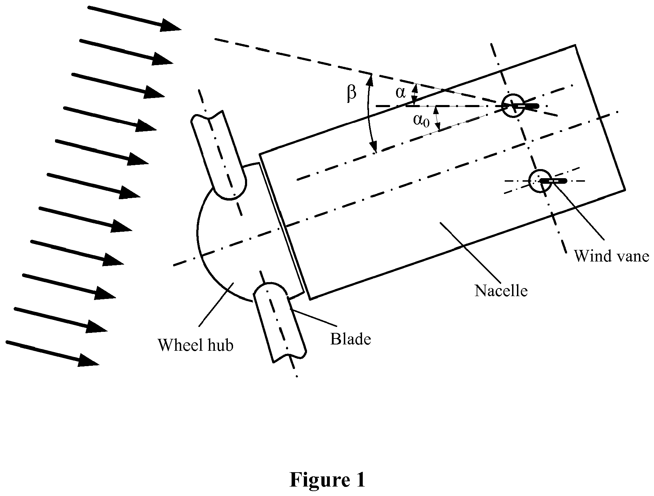

A wind vane is mounted on a meteorological frame at the rear of the top of a nacelle cover. The wind vane is used to measure a deviation angle between a wind direction and a centerline of the nacelle, that is, a wind alignment error. Because the order of magnitude of the characteristic size of the wind vane is different from the order of magnitude of the characteristic size of the plane of the top of the nacelle cover, it is difficult to ensure that the zero position of the wind vane is parallel to the centerline of the nacelle by visual inspection of an operator or by using simple wind vane zero positioning equipment. According to engineering experience, there are still many factors that may cause the wind vane to shift or loose during the operation of a wind farm. As shown in Figure 1, assuming that an angle between the zero position of the wind vane and the centerline of the nacelle is $\alpha 0$, and the wind alignment error measured by the wind vane is $\alpha$, then the angle between the centerline of the nacelle and the wind direction is $\beta=\alpha+\alpha 0$, and $\alpha 0$ is regarded as the "inherent wind alignment error" of the yaw system. Due to the existence of the "inherent wind alignment error", the nacelle cannot accurately align to the wind, which may directly affect the actual output performance of the generator set.

In addition, the rapid rise and application of big data processing and cloud computing technology has a huge impact on the wind power industry. Considering that wind farms have a large amount of data information, and these data are largely in the form of disordered source data, the current "idle" data does not provide more value for the operation process of wind farms.

On basis of the above considerations, a method for automatically calibrating a wind alignment error of a wind power generator set is provided by an embodiment of the present disclosure. In the method, historical operation data of the wind power generator set is fully utilized. The inherent wind alignment error of the yaw system of the wind power generator set is automatically identified by performing data mining and analysis on the historical operation data. Furthermore, the zero position parameter of the yaw control system is automatically adjusted based on the inherent wind alignment error, thereby enhancing the self-adaptive capability of the yaw system of the generator set, and improving the actual output performance of the generator set.

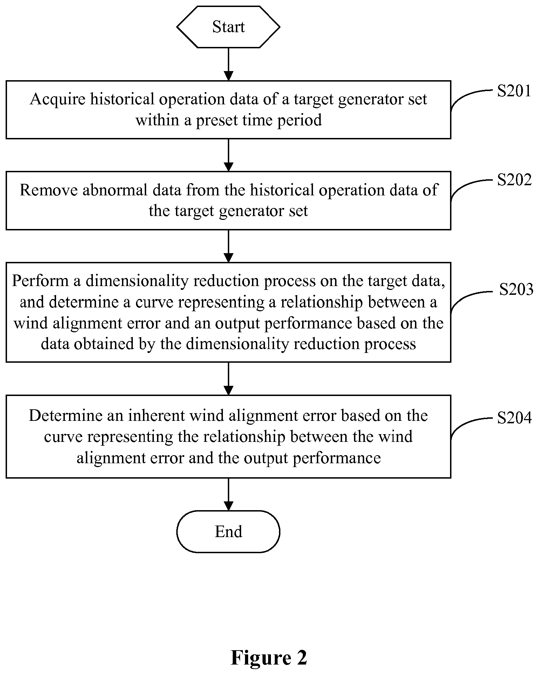

Referring to Figure 2, Figure 2 is a schematic flowchart of a method for automatically calibrating a wind alignment error of a wind power generator set according to an embodiment of the present disclosure. The method includes steps S201 to step S205.

In step S201, historical operation data of a target generator set within a preset time period is acquired.

The historical operation data of the target generator set may include a sampling time of data, a state of the wind power generator set, a wind speed, an active power, a generator speed, a pitch angle and a wind alignment error.

In step S202, abnormal data is removed from the historical operation data of the target generator set to acquire target data.

In step S203, a dimensionality reduction process is performed on the target data, and a curve representing a relationship between a wind alignment error and an output performance is determined based on the data obtained by the dimensionality reduction process.

In step S204, an inherent wind alignment error is determined based on the curve representing the relationship between the wind alignment error and the output performance.

In the present embodiment, the wind alignment error corresponding to the highest point in the curve representing the relationship between the wind alignment error and the output performance serves as the inherent wind alignment error of the target generator set.

In step S205, a zero position parameter of a yaw system of the target generator set is corrected based on the inherent wind alignment error.

In the method for automatically calibrating the wind alignment error of the wind power generator set according to the present disclosure, abnormal data is firstly removed from the historical operation data of the generator set, then a dimensionality reduction process is performed on the data in which the abnormal data is removed, and a curve representing a relationship between a wind alignment error and an output performance is determined, and an inherent wind alignment error is determined based on the curve representing the relationship between the wind alignment error and the output performance, and a zero position parameter of a yaw system of the target generator set is corrected based on the inherent wind alignment error. In the method according to the embodiment of the disclosure, the inherent wind alignment error of the yaw system of the wind power generator set is determined by performing a clustering process and a dimensionality reduction process or the like on the historical operation data. Furthermore, the zero position parameter of the yaw control system is automatically adjusted based on the inherent wind alignment error, thereby enhancing the self-adaptive capability of the yaw system of the generator set, and improving the actual output performance of the generator set.

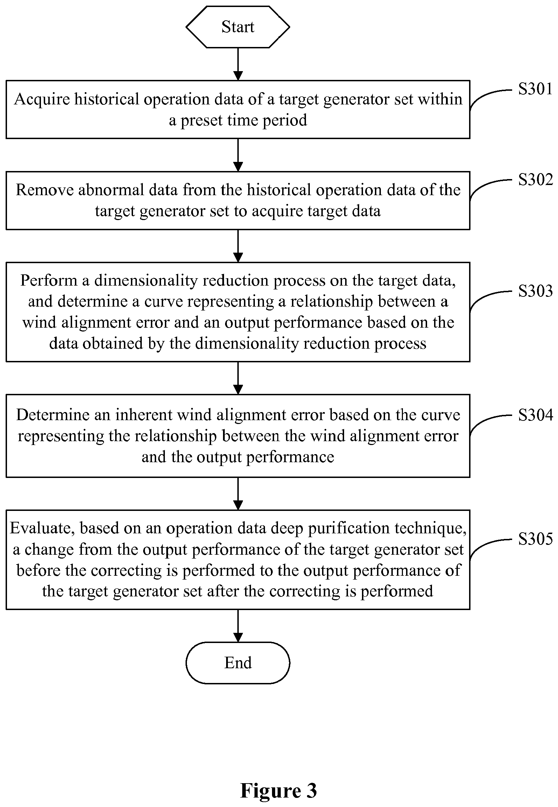

Referring to Figure 3, Figure 3 is a schematic flowchart of a method for automatically calibrating a wind alignment error of a wind power generator set according to an embodiment of the present disclosure. The method includes steps S301 to step S306.

In step S301, historical operation data of a target generator set within a preset time period is acquired.

The historical operation data of the target generator set may include a sampling time of data, a state of the wind power generator set, a wind speed, an active power, a generator speed, a pitch angle and a wind alignment error.

In step S302, abnormal data is removed from the historical operation data of the target generator set to acquire target data.

In step S303, a dimensionality reduction process is performed on the target data, and a curve representing a relationship between a wind alignment error and an output performance is determined based on the data obtained by the dimensionality reduction process.

In step S304, an inherent wind alignment error is determined based on the curve representing the relationship between the wind alignment error and the output performance.

In the present embodiment, the wind alignment error corresponding to the highest point in the curve representing the relationship between the wind alignment error and the output performance serves as the inherent wind alignment error of the target generator set.

In step S305, a zero position parameter of a yaw system of the target generator set is corrected based on the inherent wind alignment error.

In step S306, a change from the output performance of the target generator set before the correcting is performed to the output performance of the target generator set after the correcting is performed is evaluated based on an operation data deep purification technique.

In the method for automatically calibrating the wind alignment error of the wind power generator set according to the present disclosure, abnormal data is firstly removed from the historical operation data of the generator set, then a dimensionality reduction process is performed on the data in which the abnormal data is removed, and a curve representing a relationship between a wind alignment error and an output performance is determined, and an inherent wind alignment error is determined based on the curve representing the relationship between the wind alignment error and the output performance, and a zero position parameter of a yaw system of the target generator set is corrected based on the inherent wind alignment error. Finally, a change from the output performance of the target generator set before the correcting is performed to the output performance of the target generator set after the correcting is performed may be evaluated. In the method according to the embodiment of the disclosure, the inherent wind alignment error of the yaw system of the wind power generator set is determined by performing a clustering process and a dimensionality reduction process or the like on the historical operation data. Furthermore, the zero position parameter of the yaw control system is automatically adjusted based on the inherent wind alignment error, thereby enhancing the self-adaptive capability of the yaw system of the generator set, and it is determined based on the evaluation result that the actual output performance of the generator set is improved.

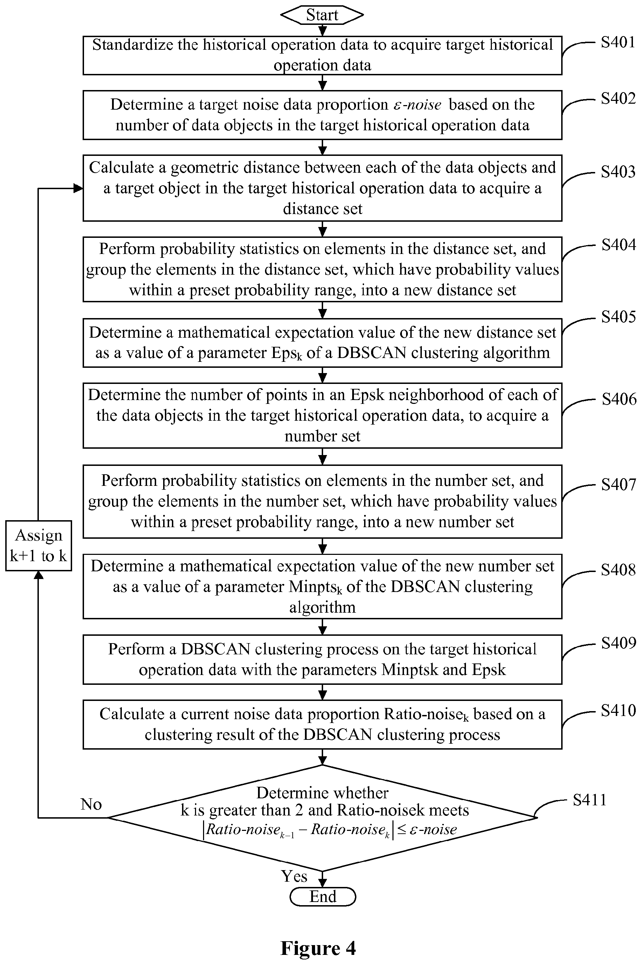

Generally, there are some abnormal data in the historical operation data of the wind power generator set, and the abnormal data may has an adverse impact on the determination of the inherent wind alignment error. In order to avoid the adverse impact of the abnormal data on the determination of the inherent wind alignment error, the abnormal data is removed from the historical operation data of the wind power generator set according to the embodiment of the present disclosure. There are various implementation manners for removing the abnormal data. In a possible implementation manner, a clustering process is performed on the historical operation data, and the abnormal data is removed based on a clustering result of the clustering process. Preferably, the clustering process may be performed on the historical operation data of the target generator set by using an improved DBSCAN clustering algorithm, and the abnormal data may be removed based on the clustering result. Referring to Figure 4, Figure 4 is a schematic flowchart of an implementation manner of performing a clustering process on the historical operation data, which includes step S401 to step S411.

In step S401, the historical operation data is standardized to acquire target historical operation data.

It should be noted that different types of operation data have different dimensions, and the range of the amount of the data varies greatly. In a case that the clustering process is performed by using the density-based clustering algorithm (that is, DBSCAN clustering algorithm), a standardizing process is usually needs to performed firstly to convert the data to a range from 0 to 1.

In step S402, a target noise data proportion $\varepsilon$-noise is determined based on the number of data objects in the target historical operation data.

In step S403, a geometric distance between each of the data objects and a target object in the target historical operation data is calculated to acquire a distance set.

The target object is a data object in the target historical operation data which has the k-th geometric distance in an ascending order of geometric distances between a data object and the data objects, where an initial value of k is 2.

Assuming that there are n objects in the target historical operation data, and the geometric distance between each data object and the target object is *k-dis,* then the distance set is $Dist_k = \{k\text{-}dis_1, k\text{-}dis_2, \cdots k\, dis_n\}$.

In step S404, probability statistics is performed on elements in the distance set, and the elements in the distance set, which have probability values within a preset probability range, are grouped into a new distance set.

In the present embodiment, elements in the distance set, which have probability values within a probability range of 5%-95%, may be grouped into a new distance set.

In step S405, a mathematical expectation value of the new distance set is determined as a value of a parameter $Eps_k$ of a DBSCAN clustering algorithm.

In step S406, the number of points in an Epsk neighborhood of each of the data objects in the target historical operation data is determined to acquire a number set $P_k = \{p_1, p_2, \cdots p_n\}$.

In step S407, probability statistics is performed on elements in the number set, and the elements in the number set, which have probability values within a preset probability range, are grouped into a new number set.

In step S408, a mathematical expectation value of the new number set is determined as a value of a parameter $Minpts_k$ of the DBSCAN clustering algorithm.

In the present embodiment, the elements in the number set, which have probability values within a probability range of 5%-95% may be grouped into a new number set $P_k^*$, and the mathematical expectation value of $P_k^*$ is assigned to $Minpts_k$.

In step S409, a DBSCAN clustering process is performed on the target historical operation data with the parameters $Minpts_k$ and $Eps_k$.

In step S410, a current noise data proportion Ratio-noisek is calculated based on a clustering result of the DBSCAN clustering process.

In step S411, it is determined whether k meets k>2 and Ratio-noisek meets $|Ratio\text{-}noise_{k-1} - Ratio\text{-}noise_k| \leq \varepsilon\text{-}noise.$ The clustering process is ended, in a case that k>2 and Ratio-noisek meets $|Ratio\text{-}hoise_{k-1} - Ratio\text{-}noise_k| \leq \varepsilon\text{-}noise.$ k+1 is assigned to k, and then it is turned to perform step S403, in a case that k does not meet k>2 and/or Ratio-noisek does not meet |*Ratio-noise$_{k-1}$ - Ratio-noise$_k$*|≤$\varepsilon$*-noise*.

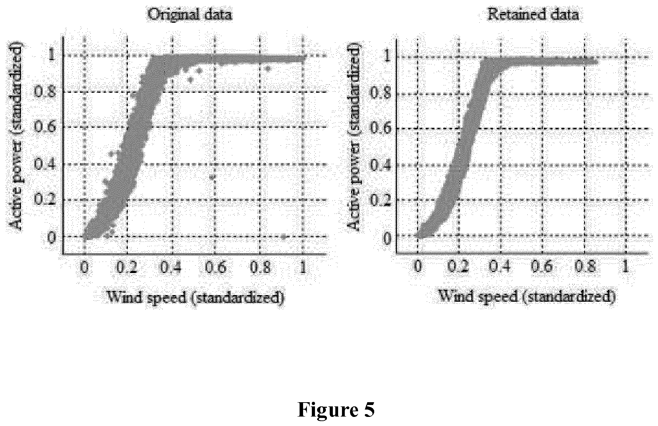

Referring to Figure 5, Figure 5-a is a scatter diagram of the historical operation data before the clustering process is performed, and Figure 5-b is a scatter diagram of the historical operation data after the clustering process is performed on the historical operation data with an improved DBSCAN clustering algorithm to remove abnormal data. DBSCAN clustering algorithm is a classic density-based clustering algorithm, which has a fast clustering speed and is capable of finding clusters of arbitrary shapes in a dataset having abnormal data. The accuracy of the DBSCAN clustering algorithm is related to the selection of two parameters Eps and Minpts. In the embodiment of the disclosure, the parameters Eps and Minpt of the DBSCAN algorithm is determined adaptively during the clustering process, thereby ensuring the reliability and accuracy of the clustering result, and fully eliminating the adverse impact of the abnormal data on the determination of inherent wind alignment error of the yaw system of the wind power generator set.

It should be noted that, in addition to the above mentioned case that the target data is obtained by removing the abnormal data with the improved DBSCAN clustering algorithm, the data may also be filtered based on normal variation ranges of main parameters in the historical operation data, and then the data is reconstructed by using a linear interpolation method to acquire the target data. In addition, the target data may also be acquired based on a method for removing the abnormal data, such as a quartile method and a k-means clustering algorithm.

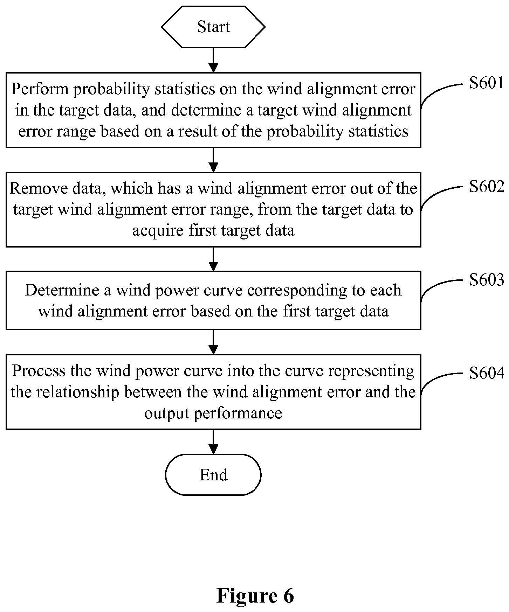

Referring to Figure 6, Figure 6 is a schematic flowchart of an implementation manner of performing a dimensionality reduction process on the target data and determining a curve representing a relationship between a wind alignment error and an output performance based on the data obtained by the dimensionality reduction process, in the method for automatically calibrating a wind alignment error of a wind power generator set according to an embodiment of the present disclosure. The implementation manner shown in Figure 6 includes steps S601 to S604.

In step S601, probability statistics is performed on the wind alignment error in the target data, and a target wind alignment error range is determined based on a result of the probability statistics.

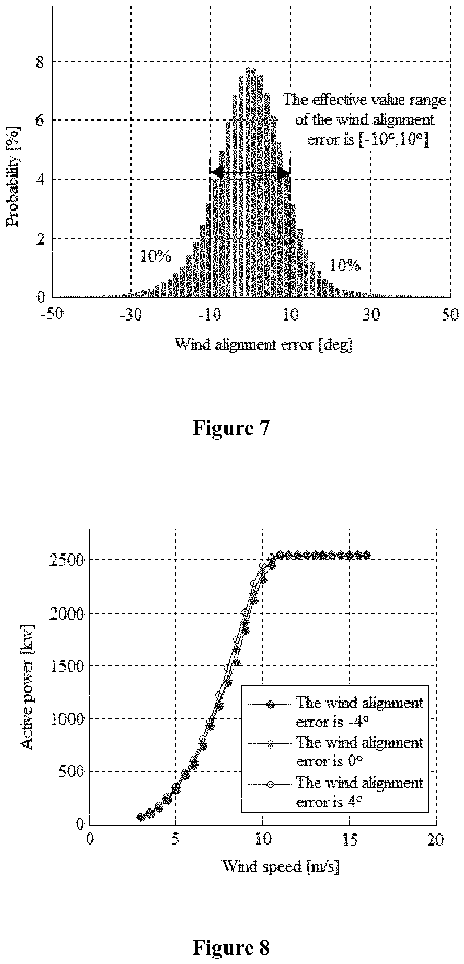

In the present embodiment, a wind alignment error range, determined by the wind alignment errors having probability values within a probability range of 10% to 90%, may be determined as the target wind alignment error range, as shown in Figure 7.

In step S602, data, which has a wind alignment error out of the target wind alignment error range, is removed from the target data to acquire first target data.

In step S603, a wind power curve corresponding to each wind alignment error is determined based on the first target data.

The wind power curve is a curve representing a relationship between a wind speed and an active power.

In the present embodiment, in the target wind alignment error range, a dimensionality reduction process is performed on the data by using the Bin method. The wind power curves corresponding to different wind alignment errors as shown in Figure 8 are fitted, and the method for fitting the wind power curve may be implemented by referring to IEC61400-12-1-2005 standard.

In step S604, the wind power curve is processed into the curve representing the relationship between the wind alignment error and the output performance.

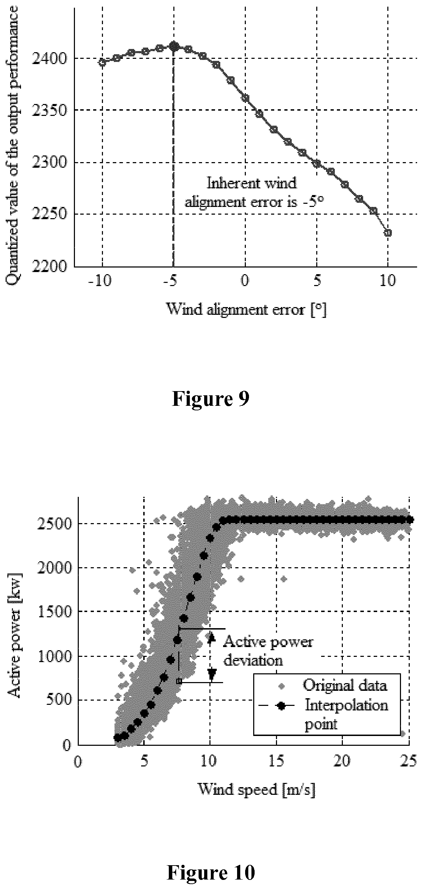

Specifically, an integral process is performed on each of the wind power curves corresponding to different wind alignment errors, to acquire a quantized value of the output performance EOH (theoretical equivalent hours of power generation at the rated power in one year), the curve representing a relationship between the wind alignment error and output performance as shown in Figure 9 is acquired, the wind alignment error corresponding to the highest point of the curve serves as the inherent wind alignment error of the target generator set.

The zero position parameter of the yaw system of the target generator set may be corrected based on the inherent wind alignment error after the inherent wind alignment error is determined. In order to determine the correction effect, in the embodiment of the disclosure, a change from the output performance of the target generator set before the correcting is performed to the output performance of the target generator set after the correcting is performed is evaluated based on an operation data deep purification technique.

Specifically, a process of evaluating, based on an operation data deep purification technique, a change from the output performance of the target generator set before the correcting is performed to the output performance of the target generator set after the correcting is performed includes steps (1) to (9).

In step (1), before-correction operation data of the target generator set before the correcting is performed and after-correction operation data of the target generator set after the correcting is performed are acquired.

In step (2), each of the before-correction operation data and the after-correction operation data is divided into two sets according to a rated wind speed.

In step (3), abnormal data is removed from the two sets of the before-correction operation data, and the two sets of the before-correction operation data, in which the abnormal data is removed, are merged to acquire target before-correction operation data. Abnormal data is removed from the two sets of the after-correction operation data, and the two sets of the after-correction operation data, in which the abnormal data is removed, are merged to acquire target after-correction operation data.

In step (4), a wind power curve fitted to each of the target before-correction operation data and the target after-correction operation data, and linear interpolation is performed on the wind power curve with respect to a wind speed in each of the target before-correction operation data and the target after-correction operation data, to acquire a theoretical active power corresponding to each wind speed.

In step (5), a power deviation between an actual active power and the theoretical active power of each data point in each of the target before-correction operation data and the target after-correction operation data is calculated to acquire the power deviation corresponding to each data point. Figure 10 shows the power deviation between an actual active power and a theoretical active power of a data point.

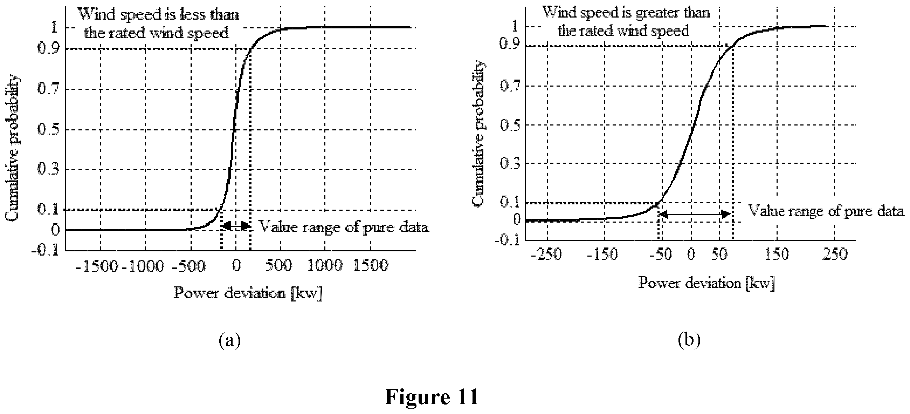

In step (6), probability statistics is performed on the power deviations corresponding to data points. Figure 11-a shows a statistical result of the power deviation for a case that a wind speed is less than a rated wind speed, and Figure 11-b shows a statistical result of the power deviation for a case that the wind speed is greater than the rated wind speed.

In step (7), the data points, which have probability densities out of a preset range, are removed based on a result of the probability statistics, to obtain new target before-correction operation data and new target after-correction operation data. Then, it is turned to perform the step (2), until the fitted wind power curve no longer changes. Specifically, data points with probability density less than 10% and probability density greater than 90% are regarded as outlier data and edge data, and these data are removed.

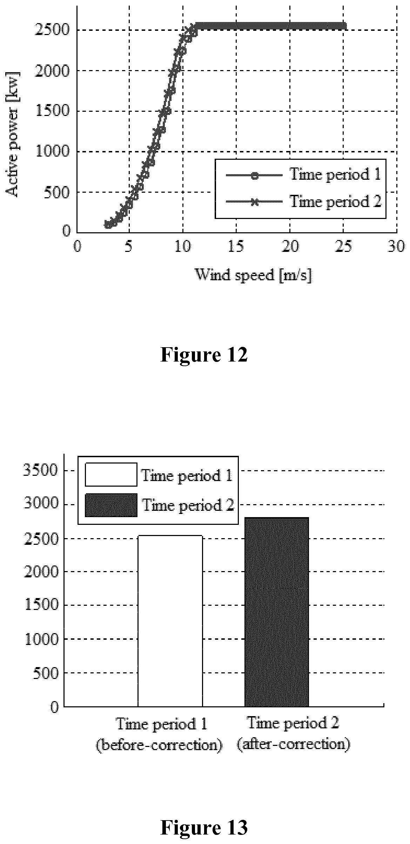

In step (8), the wind power curve before the correcting is performed is converted into a quantized value of the output performance before the correcting is performed by performing an integral process on the wind power curve before the correcting is performed, and the wind power curve after the correcting is performed is converted to a quantized value of the output performance after the correcting is performed by performing an integral process on the wind power curve after the correcting is performed. Figure 12 is a diagram shows comparison between the wind power curve of the generator set before the correcting is performed and the wind power curve of the generator set after the correcting is performed.

In step (9), the quantitative value of the output performance before the correcting is performed is compared with the quantitative value of the output performance after the correcting is performed, to acquire the change from the output performance of the target generator set before the correcting is performed to the output performance of the target generator set after the correcting is performed. Figure 13 is an evaluation result diagram of the output performances of the target generator set before the correcting is performed and the output performances of the target generator set after the correcting is performed.

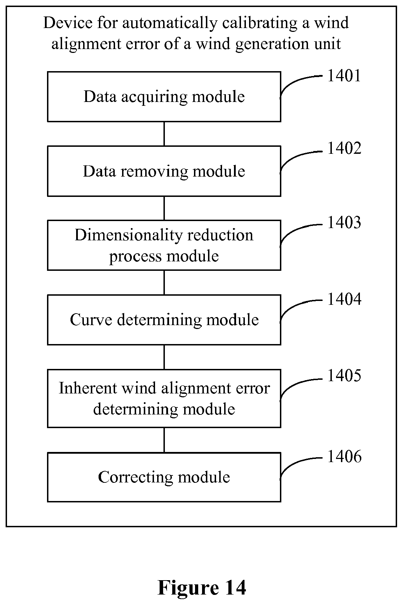

A device for automatically calibrating a wind alignment error of a wind power generator set corresponding to the above method is further provided in the embodiment of the present disclosure. Referring to Figure 14, Figure 14 shows a schematic structural diagram of the device, the device may include a data acquiring module 1401, an abnormal data removing module 1402, a dimensionality reduction process module 1403, a curve determining module 1404, an inherent wind alignment error determining module 1405 and a correcting module 1406.

The data acquiring module 1401 is configured to acquire historical operation data of a target generator set within a preset time period.

The data removing module 1402 is configured to remove abnormal data from the historical operation data, to acquire target data.

The dimensionality reduction process module 1403 is configured to perform a dimensionality reduction process on the target data obtained by the data removing module 1402 after the abnormal data is removed.

The curve determining module 1404 is configured to determine a curve representing a relationship between a wind alignment error and an output performance based on the data obtained by the dimensionality reduction process module 1403 after the dimensionality reduction process is performed.

The inherent wind alignment error determining module 1405 is configured to determine an inherent wind alignment error based on the curve representing the relationship between the wind alignment error and the output performance determined by the curve determining module 1404.

The correcting module 1406 is configured to correct a zero position parameter of a yaw system of the target generator set based on the inherent wind alignment error determined by the inherent wind alignment error determining module 1405.

In the device for automatically calibrating the wind alignment error of the wind power generator set according to the present disclosure, abnormal data is firstly removed from the historical operation data of the generator set, then a dimensionality reduction process is performed on the data in which the abnormal data is removed, and a curve representing a relationship between a wind alignment error and an output performance is determined, and an inherent wind alignment error is determined based on the curve representing the relationship between the wind alignment error and the output performance, and a zero position parameter of a yaw system of the target generator set is corrected based on the inherent wind alignment error. In the device according to the embodiment of the disclosure, the inherent wind alignment error of the yaw system of the wind power generator set is determined by performing a clustering process and a dimensionality reduction process or the like on the historical operation data. Furthermore, the zero position parameter of the yaw control system is automatically adjusted based on the inherent wind alignment error, thereby enhancing the self-adaptive capability of the yaw system of the generator set, and improving the actual output performance of the generator set.

In the device for automatically calibrating a wind alignment error of a wind power generator set according to the above embodiment, the data removing module includes a clustering module and a removing module.

The clustering module is configured to perform a clustering process on the historical operation data, to acquire a clustering result.

The removing module is configured to remove the abnormal data based on the clustering result of the clustering process.

Furthermore, the clustering module includes a standardizing process submodule, a noise data proportion determining submodule, a distance calculating submodule, a first probability statistics submodule, a distance set determining submodule, a first parameter determining submodule, a number set determining submodule, a second probability statistics submodule, a first number set determining submodule, a second probability statistics submodule, a second number set determining submodule, a second parameter determining submodule, a clustering process submodule, a noise data proportion calculating submodule, a judging submodule, and an assigning submodule.

The standardizing process submodule is configured to standardize the historical operation data to acquire target historical operation data.

The noise data proportion determining submodule is configured to determine a target noise data proportion $\varepsilon$-noise based on the number of data objects in the target historical operation data.

The distance calculating submodule is configured to calculate a geometric distance between each of the data objects and a target object in the target historical operation data to acquire a distance set. The target object is a data object in the target historical operation data which has the k-th geometric distance in an ascending order of geometric distances between a data object and the data objects, an initial value of k is 2.

The first probability statistics submodule is configured to perform probability statistics on elements in the distance set.

The distance set determining submodule is configured to group the elements in the distance set, which have probability values within a preset probability range, into a new distance set.

The first parameter determining submodule is configured to determine a mathematical expectation value of the new distance set as a value of a parameter $Eps_k$ of a DBSCAN clustering algorithm.

The first number set determining submodule is configured to determine the number of points in an Epsk neighborhood of each of the data objects in the target historical operation data, to acquire a number set.

The second probability statistics submodule is configured to perform probability statistics on elements in the number set.

The second number set determining submodule is configured to group the elements in the number set, which have probability values within a preset probability range, into a new number set.

The second parameter determining submodule is configured to determine a mathematical expectation value of the new number set as a value of a parameter $Minpts_k$ of the DBSCAN clustering algorithm.

The clustering process submodule is configured to perform a DBSCAN clustering process on the target historical operation data with the parameters Minptsk and Epsk.

The noise data proportion calculating submodule is configured to calculate a current noise data proportion Ratio-noisek based on a clustering result of the DBSCAN clustering process.

The judging submodule is configured to determine whether k is greater than 2 and Ratio-noisek meets $|Ratio\text{-}noise_{k-1} - Ratio\text{-}noise_k| \leq \varepsilon\text{-}noise$. The clustering process is ended, in a case that k is greater than 2 and Ratio-noisek meets $|Ratio\text{-}hoise_{k-1} - Ratio\text{-}noise_k| \leq \varepsilon\text{-}noise$. The assigning submodule is trigerred to assign k+1 to k, and the distance calculating submodule is triggered to calculate a geometric distance between each of the data objects and a target object in the target historical operation data, in a case that k is not greater than 2 and/or Ratio-noisek does not meet $|Ratio\text{-}noise_{k-1} - Ratio\text{-}noise_k| \leq \varepsilon\text{-}noise$.

In the device for automatically calibrating a wind alignment error of a wind power generator set according to the above embodiment, the dimensionality reduction process module includes a probability statistics submodule and a data removing submodule.

The probability statistics submodule is configured to perform probability statistics on the wind alignment error in the target data, and determine a target wind alignment error range based on a result of the probability statistics.

The data removing submodule is configured to remove data, which has a wind alignment error out of the target wind alignment error range, from the target data to acquire first target data.

The curve determining module includes a first curve determining submodule and a second curve determining submodule.

The first curve determining submodule is configured to determine a wind power curve corresponding to each wind alignment error based on the first target data. The wind power curve is a curve representing a relationship between a wind speed and an active power.

The second curve determining submodule is configured to process the wind power curve into the curve representing the relationship between the wind alignment error and the output performance.

The device for automatically calibrating a wind alignment error of a wind power generator set according to the above embodiment further includes an evaluating module configured to evaluate, according to a preset evaluating method, a change from the output performance of the target generator set before the correcting is performed to the output performance of the target generator set after the correcting is performed.

Furthermore, the evaluating module includes a data acquiring submodule, a data dividing submodule, an abnormal data removing submodule, a data merging submodule, a data fitting submodule, a data interpolating submodule, a power deviation calculating submodule, a wind power curve processing submodule and a comparing submodule.

The data acquiring submodule is configured to acquire before-correction operation data of the target generator set before the correcting is performed and after-correction operation data of the target generator set after the correcting is performed.

The data dividing submodule is configured to divide each of the before-correction operation data and the after-correction operation data into two sets according to a rated wind speed.

The abnormal data removing submodule is configured to remove abnormal data from the two sets of the before-correction operation data and to remove abnormal data from the two sets of the after-correction operation data.

The data merging submodule is configured to merge the two sets of the before-correction operation data in which the abnormal data is removed, to acquire target before-correction operation data and to merge the two sets of the after-correction operation data in which the abnormal data is removed, to acquire target after-correction operation data.

The data fitting submodule is configured to fit a wind power curve to each of the target before-correction operation data and the target after-correction operation data.

The data interpolating submodule is configured to perform linear interpolation on the wind power curve with respect to a wind speed in each of the target before-correction operation data and the target after-correction operation data, to acquire a theoretical active power corresponding to each wind speed.

The power deviation calculating submodule is configured to calculate a power deviation between an actual active power and the theoretical active power of each data point in each of the target before-correction operation data and the target after-correction operation data, to acquire the power deviation corresponding to each data point.

The abnormal data removing submodule is further configured to: perform probability statistics on the power deviations corresponding to data points; remove the data points, which have probability densities out of a preset range, based on a result of the probability statistics, to acquire new before-correction operation data and new after-correction operation data; and then trigger the data dividing submodule to divide the before-correction operation data into two sets according to a rated wind speed, until the fitted wind power curve no longer changes.

The wind power curve processing submodule is configured to convert the wind power curve before the correcting is performed into a quantized value of the output performance before the correcting is performed by performing an integral process on the wind power curve before the correcting is performed, and to convert the wind power curve after the correcting is performed to a quantized value of the output performance after the correcting is performed by performing an integral process on the wind power curve after the correcting is performed.

The comparing submodule is configured to compare the quantitative value of the output performance before the correcting is performed with the quantitative value of the output performance after the correcting is performed, to acquire the change from the output performance of the target generator set before the correcting is performed to the output performance of the target generator set after the correcting is performed.

According to the method and device for automatically calibrating a wind alignment error of a wind power generator set provided by the present disclosure, the clustering process is performed on the operation data of the generator set by using the improved DBSCAN algorithm, to remove the abnormal data, and thereby sufficiently eliminating the adverse impact of the abnormal data on the automatic identification process of the inherent wind alignment error of the yaw system of a wind power generator set. The accuracy of an online identification of the inherent wind alignment error of the yaw system is improved by performing the probability statistics and the dimensionality reduction process, and timely feedback can be achieved when the wind vane shifts again due to external disturbances. The zero position parameter of the yaw control system is automatically adjusted based on the inherent wind alignment error, so as to enhance the adaptive level of the yaw system of the generator set and improve the wind alignment efficiency, and further to eliminate the periodic review of the wind vane performed by the operator and maintainer and to reduce the human error, thereby improving the reliability of the yaw system of the generator set. In the process of evaluating, based on an operation data deep purification technique, a change from the output performance of the wind power generator set before the correcting is performed to the output performance of the wind power generator set after the correcting is performed, the abnormal data is eliminated and pure data capable of characterizing the performance of the generator set in a steady state, therefore, the output performance of the wind power generator set may be evaluated accurately.

The above embodiments of the disclosure are described in a progressive manner. Each of the embodiments is mainly focused on describing its differences from other embodiments, and references may be made among these embodiments with respect to the same or similar parts.

In the embodiments according to the present disclosure, it should be understood that the disclosed method, apparatus and device may be implemented in other ways. For example, the embodiments of the device described above are only schematic. For example, the division of the units is only a division according to logical function, and there may be other division modes in the practical implementation, for instance, multiple units or components may be combined, or may be integrated into another system; and some features may be omitted or may not be performed. In addition, the coupling, direct coupling or communication connection displayed or discussed above may be realized by some communication interfaces, or indirect coupling or communication connection of devices or units, and may be electrical, mechanical or of other forms.

The above unit described as a separate component may be or may not be separated physically. The component displayed as a unit may be or may not be a physical unit, that is, may be located at one place or may be distributed on multiple network units. The object of the solutions of the embodiments may be achieved by selecting a part or all of the units according to the practical needs. In addition, all function units according to the embodiment of the present disclosure may be integrated into one processing unit, or may be physically separate units, or two or more units are integrated into one unit.

In the case that the function is implemented in the form of software function unit and is sold or used as a separate product, it can also be stored in a computer readable storage medium. Based on such understanding, the essence, or the part that contributes to the conventional technology of the technical solutions of the present disclosure, or, a part of the technical solutions may be embodied in the form of a software product. The computer software product is stored in a storage medium, and includes several instructions configured to cause a computer device (which may be a personal computer, a server, or a network device, and etc.) to execute all or part of the steps of the method of each embodiment of the present disclosure. The storage medium described above includes various media capable of storing program codes, such as a USB flash disk, a movable hard disk, a Read-Only Memory (ROM), a Random Access Memory (RAM), a magnetic disc or an optical disc.

The above illustration of the disclosed embodiments enables those skilled in the art to implement or practice the present disclosure. Various modifications to the embodiments are apparent to the person skilled in the art, and the general principle defined herein can be implemented in other embodiments without departing from the scope of the present disclosure. Therefore, the present disclosure is not limited to the embodiments described herein, but should be in accordance with the broadest scope consistent with the principle and novel features disclosed herein.

## Claims

1. A method for automatically calibrating a wind alignment error of a wind power generator set, comprising:

   acquiring historical operation data of a target generator set within a preset time period (S201);
   removing abnormal data from the historical operation data of the target generator set to acquire target data (S202);
   performing a dimensionality reduction process on the target data, and determining a curve representing a relationship between a wind alignment error and an output performance based on the data obtained by the dimensionality reduction process (S203),
   wherein the performing a dimensionality reduction process on the target data, and determining a curve representing a relationship between a wind alignment error and an output performance based on the data obtained by the dimensionality reduction process (S203) comprises:

      performing probability statistics on the wind alignment error in the target data, and determining a target wind alignment error range based on a result of the probability statistics (S601);
      removing data, which has a wind alignment error out of the target wind alignment error range, from the target data to acquire first target data (S602);
      determining a wind power curve corresponding to each wind alignment error based on the first target data (S603), wherein the wind power curve is a curve representing a relationship between a wind speed and an active power; and
      processing the wind power curve into the curve representing the relationship between the wind alignment error and the output performance (S604),
      wherein the processing the wind power curve into the curve representing the relationship between the wind alignment error and the output performance (S604) comprises:

         performing an integral process on each of wind power curves corresponding to different wind alignment errors, to acquire a quantized value of the output performance, and
         acquiring the curve representing a relationship between the wind alignment error and output performance;

determining an inherent wind alignment error based on the curve representing the relationship between the wind alignment error and the output performance (S204), wherein the inherent wind alignment error represents an angle between a zero position of a wind vane and a centerline of a nacelle; and

correcting a zero position parameter of a yaw system of the target generator set based on the inherent wind alignment error.

2. The method according to claim 1, wherein the removing abnormal data from the historical operation data of the target generator set (S202) comprises: performing a clustering process on the historical operation data, and removing the abnormal data based on a clustering result of the clustering process.

3. The method according to claim 2, wherein the performing a clustering process on the historical operation data comprises:

standardizing the historical operation data to acquire target historical operation data (S401);

determining a target noise data proportion $\varepsilon$-$noise$ based on the number of data objects in the target historical operation data (S402);

calculating a geometric distance between each of the data objects and a target object in the target historical operation data to acquire a distance set (S403), wherein the target object is a data object in the target historical operation data which has the k-th geometric distance in an ascending order of geometric distances between a data object and the data objects, wherein an initial value of k is 2;

performing probability statistics on elements in the distance set, and grouping the elements in the distance set, which have probability values within a preset probability range, into a new distance set (S404);

determining a mathematical expectation value of the new distance set as a value of a parameter $Eps_k$ of a DBSCAN clustering algorithm (S405);

determining the number of points in an $Eps_k$ neighborhood of each of the data objects in the target historical operation data, to acquire a number set (S406);

performing probability statistics on elements in the number set, and grouping the elements in the number set, which have probability values within a preset probability range, into a new number set (S407);

determining a mathematical expectation value of the new number set as a value of a parameter $Minpts_k$ of the DBSCAN clustering algorithm (S408);

performing a DBSCAN clustering process on the target historical operation data with the parameters $Minpts_k$ and $Eps_k$ (S409);

calculating a current noise data proportion Ratio-noisek based on a clustering result of the DBSCAN clustering process (S410);

ending the clustering process, in a case that k>2 and Ratio-noisek meets $|Ratio\text{-}noise_{k-1} - Ratio\text{-}noise_k| \leq \varepsilon\text{-}noise$; and

assigning k+1 to k, and then turning to perform the step of calculating a geometric distance between each of the data objects and a target object in the target historical operation data, in a case that k does not meet k>2 and/or Ratio-noisek does not meet $|Ratio\text{-}noise_{k-1} - Ratio\text{-}noise_k| \leq \varepsilon\text{-}noise$.

4. The method according to any one of claims 1 to 3, further comprises:

acquiring before-correction operation data of the target generator set before the correcting is performed and after-correction operation data of the target generator set after the correcting is performed;

dividing each of the before-correction operation data and the after-correction operation data into two sets according to a rated wind speed;

removing abnormal data from the two sets of the before-correction operation data, and merging the two sets of the before-correction operation data in which the abnormal data is removed, to acquire target before-correction operation data; and removing abnormal data from the two sets of the after-correction operation data, and merging the two sets of the after-correction operation data in which the abnormal data is removed, to acquire target after-correction operation data;

fitting a wind power curve to each of the target before-correction operation data and the target after-correction operation data, and performing linear interpolation on the wind power curve with respect to a wind speed in each of the target before-correction operation data and the target after-correction operation data, to acquire a theoretical active power corresponding to each wind speed;

calculating a power deviation between an actual active power and the theoretical active power of each data point in each of the target before-correction operation data and the target after-correction operation data, to acquire the power deviation corresponding to each data point;

performing probability statistics on the power deviations corresponding to data points;

removing the data points, which have probability densities out of a preset range, based on a result of the probability statistics, and turning to perform the step of dividing each of the before-correction operation data and the after-correction operation data into two sets according to a rated wind speed, until the fitted wind power curve no longer changes;

converting the wind power curve before the correcting is performed into a quantized value of the output performance before the correcting is performed by performing an integral process on the wind power curve before the correcting is performed, and converting the wind power curve after the correcting is performed to a quantized value of the output performance after the correcting is performed by performing an integral process on the wind power curve after the correcting is performed; and

comparing the quantitative value of the output performance before the correcting is performed with the quantitative value of the output performance after the correcting is performed, to acquire a change from the output performance of the target generator set before the correcting is performed to the output performance of the target generator set after the correcting is performed.

5. A device for automatically calibrating a wind alignment error of a wind power generator set, comprising:

a data acquiring module (1401), configured to acquire historical operation data of a target generator set within a preset time period;
a data removing module (1402), configured to remove abnormal data from the historical operation data acquired by the data acquiring module (1401), to acquire target data;
a dimensionality reduction process module (1403), configured to perform a dimensionality reduction process on the target data obtained by the data removing module (1402) after the abnormal data is removed;
wherein the dimensionality reduction process module (1403) comprises:

a probability statistics submodule, configured to perform probability statistics on the wind alignment error in the target data, and determine a target wind alignment error range based on a result of the probability statistics;
a data removing submodule, configured to remove data, which has a wind alignment error out of the target wind alignment error range, from the target data to acquire first target data;

a curve determining module (1404), configured to determine a curve representing a relationship between a wind alignment error and an output performance based on the data obtained by the dimensionality reduction process module (1403) after the dimensionality reduction process is performed,
wherein the curve determining module (1404) comprises:

a first curve determining submodule, configured to determine a wind power curve corresponding to each wind alignment error based on the first target data, wherein the wind power curve is a curve representing a relationship between a wind speed and an active power; and
a second curve determining submodule, configured to process the wind power curve into the curve representing the relationship between the wind alignment error and the output performance,
wherein the second curve determining submodule is further configured to:

perform an integral process on each of wind power curves corresponding to different wind alignment errors, to acquire a quantized value of the output performance, and
acquire the curve representing a relationship between the wind alignment error and output performance;

an inherent wind alignment error determining module (1405), configured to determine an inherent wind alignment error based on the curve representing the relationship between the wind alignment error and the output performance determined by the curve determining module (1404), wherein the inherent wind alignment error represents an angle between a zero position of a wind vane and a centerline of a nacelle; and
a correcting module (1406), configured to correct a zero position parameter of a yaw system of the target generator set based on the inherent wind alignment error determined by the inherent wind alignment error determining module (1405).

6. The device according to claim 5, wherein the data removing module (1402) comprises:

a clustering module, configured to perform a clustering process on the historical operation data, to acquire a clustering result; and
a removing module, configured to remove the abnormal data based on the clustering result of the clustering process.

7. The device according to any one of claims 5 to 6, further comprising:

a data acquiring submodule, configured to acquire before-correction operation data of the target generator set before the correcting is performed and after-correction operation data of the target generator set after the correcting is performed;

a data dividing submodule, configured to divide each of the before-correction operation data and the after-correction operation data into two sets according to a rated wind speed;

an abnormal data removing submodule, configured to remove abnormal data from the two sets of the before-correction operation data and to remove abnormal data from the two sets of the after-correction operation data;

a data merging submodule, configured to merge the two sets of the before-correction operation data in which the abnormal data is removed, to acquire target before-correction operation data and to merge the two sets of the after-correction operation data in which the abnormal data is removed, to acquire target after-correction operation data;

a data fitting submodule, configured to fit a wind power curve to each of the target before-correction operation data and the target after-correction operation data;

a data interpolating submodule, configured to perform linear interpolation on the wind power curve with respect to a wind speed in each of the target before-correction operation data and the target after-correction operation data, to acquire a theoretical active power corresponding to each wind speed;

a power deviation calculating submodule, configured to calculate a power deviation between an actual active power and the theoretical active power of each data point in each of the target before-correction operation data and the target after-correction operation data, to acquire the power deviation corresponding to each data point;

wherein the abnormal data removing submodule is further configured to: perform probability statistics on the power deviations corresponding to data points; remove the data points, which have probability densities out of a preset range, based on a result of the probability statistics, to acquire new before-correction operation data and new after-correction operation data; and then trigger the data dividing submodule to divide the before-correction operation data into two sets according to a rated wind speed, until the fitted wind power curve no longer changes;

wherein the evaluating module further comprises:

a wind power curve processing submodule, configured to convert the wind power curve before the correcting is performed into a quantized value of the output performance before the correcting is performed by performing an integral process on the wind power curve before the correcting is performed, and to convert the wind power curve after the correcting is performed to a quantized value of the output performance after the correcting is performed by performing an integral process on the wind power curve after the correcting is performed; and

a comparing submodule, configured to compare the quantitative value of the output performance before the correcting is performed with the quantitative value of the output performance after the correcting is performed, to acquire a change from the output performance of the target generator set before the correcting is performed to the output performance of the target generator set after the correcting is performed.

## Patentansprüche

1. Verfahren zum automatischen Kalibrieren eines Windausrichtungsfehlers eines Windkraftgeneratorsatzes, umfassend:

Erfassen historischer Betriebsdaten eines Zielgeneratorsatzes innerhalb eines voreingestellten Zeitraums (S201);
Entfernen anormaler Daten aus den historischen Betriebsdaten des Zielgeneratorsatzes, um Zieldaten zu erfassen (S202);
Durchführen eines Dimensionalitätsreduktionsprozesses an den Zieldaten und Bestimmen einer Kurve, die eine Beziehung zwischen einem Windausrichtungsfehler und einer Ausgangsleistung darstellt, basierend auf den durch den Dimensionalitätsreduktionsprozess erhaltenen Daten (S203),
wobei das Durchführen eines Dimensionalitätsreduktionsprozesses an den Zieldaten und das Bestimmen einer Kurve, die eine Beziehung zwischen einem Windausrichtungsfehler und einer Ausgangsleistung darstellt, basierend auf den durch den Dimensionalitätsreduktionsprozess (S203) erhaltenen Daten umfasst:

Durchführen einer Wahrscheinlichkeitsstatistik für den Windausrichtungsfehler in den Zieldaten und Bestimmen eines Windausrichtungsfehler-Zielbereichs basierend auf einem Ergebnis der Wahrscheinlichkeitsstatistik (S601);

Entfernen von Daten, die einen Windausrichtungsfehler außerhalb des Windausrichtungsfehler-Zielbereichs aufweisen, aus den Zieldaten, um erste Zieldaten zu erfassen (S602);

Bestimmen einer jedem Windausrichtungsfehler entsprechenden Windleistungskurve basierend auf der ersten Zieldaten (S603), wobei die Windleistungskurve eine Kurve ist, die eine Beziehung zwischen einer Windgeschwindigkeit und einer Wirkleistung darstellt; und

Verarbeitung der Windleistungskurve in die Kurve, die die Beziehung zwischen dem Windausrichtungsfehler und der Ausgangsleistung (S604) darstellt,

wobei die Verarbeitung der Windleistungskurve in die Kurve, die die Beziehung zwischen dem Windausrichtungsfehler und der Ausgangsleistung darstellt (S604), umfasst:

Durchführen eines ganzheitlichen Prozesses auf jeder der Windleistungskurven, die verschiedenen Windausrichtungsfehlern entsprechen, um einen quantisierten Wert der Ausgangsleistung zu erhalten, und

Erfassen der Kurve, die eine Beziehung zwischen dem Windausrichtungsfehler und der Ausgangsleistung darstellt;

Bestimmen eines inhärenten Windausrichtungsfehlers basierend auf der Kurve, die die Beziehung zwischen dem Windausrichtungsfehler und der Ausgangsleistung darstellt (S204), wobei der inhärente Windausrichtungsfehler einen Winkel zwischen einer Nullposition einer Windfahne und einer Mittellinie einer Gondel darstellt; und

Korrigieren eines Nullpositionsparameters eines Giersystems des Zielgeneratorsatzes basierend auf dem inhärenten Windausrichtungsfehler.

2. Verfahren nach Anspruch 1, wobei das Entfernen anormaler Daten aus den historischen Betriebsdaten des Zielgeneratorsatzes (S202) umfasst:
Durchführen eines Clustering-Prozesses an den historischen Betriebsdaten und Entfernen der anormalen Daten basierend auf einem Clustering-Ergebnis des Clustering-Prozesses.

3. Verfahren nach Anspruch 2, wobei das Durchführen eines Clustering-Prozesses an den historischen Betriebsdaten umfasst:

Standardisierung der historischen Betriebsdaten, um historische Zielbetriebsdaten zu erfassen (S401);

Bestimmen eines Zielrauschdatenanteils $\varepsilon Rauschen$ basierend auf der Anzahl der Datenobjekte in den historischen Zielbetriebsdaten (S402);

Berechnen eines geometrischen Abstands zwischen jedem der Datenobjekte und einem Zielobjekt in den historischen Zielbetriebsdaten, um einen Abstandssatz zu erhalten (S403), wobei das Zielobjekt ein Datenobjekt in den historischen Zielbetriebsdaten ist, das den k-ten geometrischen Abstand in einer aufsteigenden Reihenfolge der geometrischen Abstände zwischen einem Datenobjekt und den Datenobjekten aufweist, wobei ein Anfangswert von k 2 ist;

Durchführen der Wahrscheinlichkeitsstatistik für Elemente in dem Abstandssatz und Gruppieren der Elemente in dem Abstandssatz, die Wahrscheinlichkeitswerte innerhalb eines voreingestellten Wahrscheinlichkeitsbereichs haben, in einen neuen Abstandssatz (S404);

Bestimmen eines mathematischen Erwartungswertes des neuen Abstandssatzes als Wert eines Parameters $Eps_k$ eines DBSCAN-Clustering-Algorithmus (S405);

Bestimmen der Anzahl von Punkten in einer $Eps_k$-Nachbarschaft jedes der Datenobjekte in den historischen Zielbetriebsdaten, um einen Zahlensatz (S406) zu erfassen;

Durchführen einer Wahrscheinlichkeitsstatistik für Elemente in dem Zahlensatz und Gruppieren der Elemente in dem Zahlensatz, die Wahrscheinlichkeitswerte innerhalb eines voreingestellten Wahrscheinlichkeitsbereichs aufweisen, in einem neuen Zahlensatz (S407);

Bestimmen eines mathematischen Erwartungswertes des neuen Zahlensatzes als Wert eines Parameters $Minpts_k$ des DBSCAN-Clustering-Algorithmus (S408);

Durchführen eines DBSCAN-Clustering-Prozesses für die historischen Zielbetriebsdaten mit den Parametern $Minpts_k$ und $Eps_k$ (S409);

Berechnen eines aktuellen Rauschdatenanteils $Verhältnis-Rauschen_k$ basierend auf einem Clustering-Ergebnis des DBSCAN-Clustering-Prozesses (S410);

Beenden des Clustering-Prozesses in einem Fall, dass k>2 und $Verhältnis-Rauschen_k$ | $Verhältnis-Rauschen_{k-1}$ - $Verhältnis-Rauschen_k$ | $\leq \varepsilon Rauschen$ erfüllt; und

Zuordnen von k+1 zu k, und dann Umschalten auf das Durchführen des Schritts des Berechnens eines geometrischen Abstands jeweils zwischen den Datenobjekten und einem Zielobjekt in den historischen Zielbetriebsdaten, in einem Fall, dass k k>2 und/oder Verhältnis-Rau-

schen$_k$ | *Verhältnis-Rauschen$_{k-1}$ - Verhältnis-Rauschen$_k$ |$\leq \varepsilon$ Rauschen nicht erfüllt.*

4. Verfahren nach einem der Ansprüche 1 bis 3 umfasst ferner:

Erfassen von Betriebsdaten vor der Korrektur des Zielgeneratorsatzes, bevor das Korrigieren durchgeführt wird, und von Betriebsdaten nach der Korrektur des Zielgeneratorsatzes, nachdem die Korrektur durchgeführt wurde; Unterteilen der Betriebsdaten vor der Korrektur und der Betriebsdaten nach der Korrektur jeweils in zwei Sätze entsprechend der Nennwindgeschwindigkeit; Entfernen anormaler Daten aus den beiden Sätzen der Betriebsdaten vor der Korrektur und Zusammenführen der beiden Sätze der Betriebsdaten vor der Korrektur, in denen die anormalen Daten entfernt sind, um Ziel-Betriebsdaten vor der Korrektur zu erfassen; und Entfernen anormaler Daten aus den beiden Sätzen der Betriebsdaten nach der Korrektur und Zusammenführen der beiden Sätze der Betriebsdaten nach der Korrektur, in denen die anormalen Daten entfernt sind, um Ziel-Betriebsdaten nach der Korrektur zu erhalten; Anpassen einer Windleistungskurve an die Ziel-Betriebsdaten vor der Korrektur und die Ziel-Betriebsdaten nach der Korrektur, und Durchführen einer linearen Interpolation an der Windleistungskurve in Bezug auf eine Windgeschwindigkeit jeweils in den Ziel-Betriebsdaten vor der Korrektur und den Ziel-Betriebsdaten nach der Korrektur, um eine theoretische Wirkleistung zu erfassen, die jeder Windgeschwindigkeit entspricht; Berechnen einer Leistungsabweichung zwischen einer tatsächlichen Wirkleistung und der theoretischen Wirkleistung jedes Datenpunktes jeweils in den Ziel-Betriebsdaten vor der Korrektur und den Ziel-Betriebsdaten nach der Korrektur, um die jedem Datenpunkt entsprechende Leistungsabweichung zu erfassen; Durchführen der Wahrscheinlichkeitsstatistik für die den Datenpunkten entsprechenden Leistungsabweichungen; Entfernen der Datenpunkte, die Wahrscheinlichkeitsdichten außerhalb eines voreingestellten Bereichs aufweisen, basierend auf einem Ergebnis der Wahrscheinlichkeitsstatistik, und Umschalten auf das Durchführen des Schritts des Unterteilens der Betriebsdaten vor der Korrektur und der Betriebsdaten nach der Korrektur in zwei Sätze gemäß einer Nennwindgeschwindigkeit, bis sich die angepasste Windleistungskurve nicht mehr ändert; Umwandeln der Windleistungskurve vor dem Durchführen des Korrigierens in einen quantisierten Wert der Ausgangsleistung vor dem Durchführen des Korrigierens durch das Durchführen eines ganzheitlichen Prozesses für die Windleistungskurve vor dem Durchführen des Korrigierens, und Umwandeln der Windleistungskurve nach dem Durchführen des Korrigierens in einen quantisierten Wert der Ausgangsleistung nach dem Durchführen des Korrigierens durch das Durchführen eines ganzheitlichen Prozesses für die Windleistungskurve nach dem Durchführen des Korrigierens; und Vergleichen des quantitativen Wertes der Ausgangsleistung vor der Durchführen des Korrigierens mit dem quantitativen Wert der Ausgangsleistung nach der Durchführen des Korrigierens, um eine Änderung der Ausgangsleistung des Zielgeneratorsatzes vor der Durchführen des Korrigierens mit der Ausgangsleistung des Zielgeneratorsatzes nach der Durchführen des Korrigierens zu erfassen.

5. Vorrichtung zum automatischen Kalibrieren eines Windausrichtungsfehlers eines Windkraftgeneratorsatzes, umfassend:

ein Datenerfassungsmodul (1401), das so ausgelegt ist, dass es historische Betriebsdaten eines Zielgeneratorsatzes innerhalb eines voreingestellten Zeitraums erfasst; ein Datenentfernungsmodul (1402), das so ausgelegt ist, dass es anormale Daten aus den historischen Betriebsdaten entfernt, die von dem Datenerfassungsmodul (1401) erfasst wurden, um Zieldaten zu erfassen; ein Dimensionalitätsreduktionsprozessmodul (1403), das so ausgelegt ist, dass es einen Dimensionalitätsreduktionsprozess an den Zieldaten durchführt, die von dem Datenentfernungsmodul (1402) erhalten wurden, nachdem die anormalen Daten entfernt wurden; wobei das Dimensionalitätsreduktionsprozessmodul (1403) umfasst:

ein Wahrscheinlichkeitsstatistikuntermodul, das so ausgelegt ist, dass es eine Wahrscheinlichkeitsstatistik für den Windausrichtungsfehler in den Zieldaten durchführt und einen Windausrichtungsfehler-Zielbereich basierend auf einem Ergebnis der Wahrscheinlichkeitsstatistik bestimmt; ein Untermodul zum Entfernen von Daten, das so ausgelegt ist, dass es Daten, die einen Windausrichtungsfehler außerhalb des Windausrichtungsfehler-Zielbereichs aufweisen, aus den Zieldaten entfernt, um erste Zieldaten zu erfassen;

ein Kurvenbestimmungsmodul (1404), das so ausgelegt ist, dass es eine Kurve bestimmt, die eine Beziehung zwischen einem Windausrichtungsfehler und einer Ausgangsleistung basierend auf den Daten darstellt, die durch das Dimensionalitätsreduktionsprozessmodul (1403) erhalten wurden, nachdem der Dimensionalitätsreduktionsprozess durchgeführt wurde,

wobei das Kurvenbestimmungsmodul (1404) umfasst:

ein erstes Kurvenbestimmungsuntermodul, das so ausgelegt ist, dass es eine Windleistungskurve bestimmt, die jedem Windausrichtungsfehler basierend auf den ersten Zieldaten entspricht, wobei die Windleistungskurve eine Kurve ist, die eine Beziehung zwischen einer Windgeschwindigkeit und einer Wirkleistung darstellt; und

ein zweites Kurvenbestimmungsuntermodul, das so ausgelegt ist, dass es die Windleistungskurve zu der Kurve verarbeitet, die die Beziehung zwischen dem Windausrichtungsfehler und der Ausgangsleistung darstellt,

wobei das zweite Kurvenbestimmungsuntermodul ferner so ausgelegt ist, dass es:

einen ganzheitlichen Prozess auf jeder der Windleistungskurven, die verschiedenen Windausrichtungsfehlern entsprechen, durchführt, um einen quantisierten Wert der Ausgangsleistung zu erfassen, und

die Kurve erfasst, die eine Beziehung zwischen dem Windausrichtungsfehler und der Ausgangsleistung darstellt;

wobei ein inhärenten Windausrichtungsfehlerbestimmungsmodul (1405) so ausgelegt ist, dass es einen inhärenten Windausrichtungsfehler basierend auf der Kurve bestimmt, die die Beziehung zwischen dem Windausrichtungsfehler und der von dem Kurvenbestimmungsmodul (1404) bestimmten Ausgangsleistung darstellt, wobei der inhärente Windausrichtungsfehler einen Winkel zwischen einer Nullposition einer Windfahne und einer Mittellinie einer Gondel darstellt; und

ein Korrekturmodul (1406), das so ausgelegt ist, dass es einen Nullpositionsparameter eines Giersystems des Zielgeneratorsatzes basierend auf dem inhärenten Windausrichtungsfehler korrigiert, der von dem inhärenten Windausrichtungsfehlerbestimmungsmodul (1405) bestimmt wird.

6. Vorrichtung nach Anspruch 5, wobei das Datenentfernungsmodul (1402) umfasst:

ein Clustering-Modul, das so ausgelegt ist, dass es einen Clustering-Prozess an den historischen Betriebsdaten durchführt, um ein Clustering-Ergebnis zu erfassen; und

ein Entfernungsmodul, das so ausgelegt ist, dass es die anormalen Daten basierend auf dem Clustering-Ergebniss des Clustering-Prozesses entfernt.

7. Vorrichtung nach einem der Ansprüche 5 bis 6, die ferner umfasst:

ein Datenerfassungsuntermodul, das so ausgelegt ist, dass es Betriebsdaten vor der Korrektur des Zielgeneratorsatzes vor den Korrigieren und Betriebsdaten nach der Korrektur des Zielgeneratorsatzes nach dem Korrigieren erfasst, bevor die Korrektur durchgeführt wird;

ein Untermodul zur Unterteilung von Daten, das so ausgelegt ist, dass es die Betriebsdaten vor der Korrektur und die Betriebsdaten nach der Korrektur jeweils in zwei Sätze entsprechend einer Nennwindgeschwindigkeit unterteilt;

ein Untermodul zum Entfernen von anormalen Daten, das so ausgelegt ist, dass es anormale Daten aus den beiden Sätzen der Betriebsdaten vor der Korrektur entfernt und anormale Daten aus den beiden Sätzen der Betriebsdaten nach der Korrektur entfernt;

ein Untermodul zum Zusammenführen von Daten, das so ausgelegt ist, dass es die zwei Sätze der Betriebsdaten vor der Korrektur, in denen die anormalen Daten entfernt werden, zusammenführt, um Ziel-Betriebsdaten vor der Korrektur zu erfassen, und um die zwei Sätze der Betriebsdaten nach der Korrektur, in denen die anormalen Daten entfernt werden, zusammenzuführen, um Ziel-Betriebsdaten nach der Korrektur zu erfassen;

ein Untermodul zur Datenanpassung, das so ausgelegt ist, dass es eine Windleistungskurve jeweils an die Ziel-Betriebsdaten vor der Korrektur und die Ziel-Betriebsdaten nach der Korrektur anpasst;

ein Untermodul zur Interpolation von Daten, das so ausgelegt ist, dass es eine lineare Interpolation an der Windleistungskurve in Bezug auf eine Windgeschwindigkeit jeweils in den Ziel-Betriebsdaten vor der Korrektur und den Ziel-Betriebsdaten nach der Korrektur durchführt, um eine theoretische Wirkleistung zu erfassen, die jeder Windgeschwindigkeit entspricht;

ein Untermodul zur Berechnung der Leistungsabweichung, das so ausgelegt ist, dass es eine Leistungsabweichung zwischen einer tatsächlichen Wirkleistung und der theoretischen Wirkleistung jedes Datenpunktes jeweils in den Ziel-Betriebsdaten vor der Korrektur und den Ziel-Betriebsdaten nach der Korrektur berechnet, um die jedem Datenpunkt entsprechende Leistungsabweichung zu erfassen;

wobei das Untermodul zum Entfernen von anormalen Daten ferner so ausgelegt ist, dass es eine Wahrscheinlichkeitsstatistik für die Leistungsabweichungen, die Datenpunkten entsprechen, durchführt; die Datenpunkte, die Wahrscheinlichkeitsdichten außerhalb eines voreingestellten Bereichs aufweisen, basierend auf einem Ergebnis der Wahrscheinlichkeitsstatistik entfernt, um neue Betriebsdaten vor der Korrektur und neue Betriebsdaten nach der Korrektur zu erfassen; und dann das Untermodul zur Unterteilung von Daten auslöst, um die Betriebsdaten vor der Korrektur in zwei Sätze gemäß einer Nennwindgeschwindigkeit zu unterteilen, bis sich die angepasste Windleistungskurve nicht mehr ändert;

wobei das Auswertungsmodul ferner umfasst:

ein Untermodul zur Verarbeitung der Windleistungskurve, das so ausgelegt ist, dass es die Windleistungskurve vor dem Durchführen des Korrigierens in einen quantisierten Wert der Ausgangsleistung umwandelt, bevor die Korrektur durch das Durchführen eines ganzheitlichen Prozesses an der Windleistungskurve durchführt, bevor die Korrektur durchgeführt wird, und die Windleistungskurve nach dem Durchführen des Korrigierens in einen quantisierten Wert der Ausgangsleistung umwandelt, nachdem die Korrektur durch das Durchführen eines ganzheitlichen Prozesses an der Windleistungskurve durchgeführt wurde, nachdem die Korrektur durchgeführt wurde; und

ein Vergleichsuntermodul, das so ausgelegt ist, dass es den quantitativen Wert der Ausgangsleistung vor dem Durchführen des Korrigierens mit dem quantitativen Wert der Ausgangsleistung nach dem Durchführen des Korrigierens vergleicht, um eine Änderung von der Ausgangsleistung des Zielgeneratorsatzes vor dem Durchführen des Korrigierens zur Ausgangsleistung des Zielgeneratorsatzes nach der Durchführen des Korrigierens zu erfassen.

## Revendications

1. Procédé d'étalonnage automatique d'une erreur d'alignement du vent d'un ensemble de production d'énergie éolienne, comprenant les étapes suivantes :

acquérir des données de fonctionnement historiques d'un ensemble de production cible au cours d'une période de temps préréglée (S201) ;
éliminer les données anormales des données de fonctionnement historiques de l'ensemble de production cible afin d'acquérir des données cibles (S202) ;
exécuter un processus de réduction de dimensionnalité sur les données cibles, et déterminer une courbe qui représente une relation entre une erreur d'alignement du vent, et les performances de sortie, sur la base des données obtenues par le processus de réduction de dimensionnalité (S203),
dans lequel l'étape consistant à exécuter un processus de réduction de la dimensionnalité sur les données cibles, et déterminer une courbe qui représente une relation entre une erreur d'alignement du vent, et les performances de sortie, sur la base des données obtenues par le processus de réduction de la dimensionnalité (S203), comprend les étapes suivantes :

exécuter des statistiques de probabilité sur l'erreur d'alignement du vent dans les données cibles, et déterminer une plage d'erreur d'alignement du vent cible, sur la base du résultat des statistiques de probabilité (S601) ;
éliminer les données, qui présentent une erreur d'alignement du vent hors de la plage d'erreur d'alignement du vent cible, des données cibles, afin d'acquérir des premières données cibles (S602) ;
déterminer une courbe d'énergie éolienne correspondant à chaque erreur d'alignement du vent, sur la base des premières données cibles (S603), dans lequel la courbe d'énergie éolienne est une courbe qui représente une relation entre la vitesse du vent et une puissance active ; et
traiter la courbe d'énergie éolienne en une courbe qui représente la relation entre l'erreur d'alignement du vent et les performances de sortie (S604),
dans lequel l'étape consistant à traiter la courbe d'énergie éolienne en une courbe qui représente la relation entre l'erreur d'alignement du vent et les performances de sortie (S604), comprend les étapes suivantes :

exécuter un processus intégral sur chacune des courbes d'énergie éolienne correspondant à différentes erreurs d'alignement du vent, afin d'acquérir une valeur quantifiée des performances de sortie, et

acquérir la courbe qui représente une relation entre l'erreur d'alignement du vent et les performances de sortie ;

déterminer une erreur d'alignement du vent inhérente, sur la base de la courbe qui représente la relation entre l'erreur d'alignement du vent et les performances de sortie (S204), dans lequel l'erreur d'alignement du vent inhérente représente l'angle entre la position zéro d'une girouette et l'axe d'une nacelle ; et

corriger un paramètre de position zéro d'un système de lacet de l'ensemble de production cible, sur la base de l'erreur d'alignement du vent inhérente.

2. Procédé selon la revendication 1, dans lequel l'étape consistant à éliminer les données anormales des données de fonctionnement historiques de l'ensemble de production cible (S202) comprend les étapes suivantes :

exécuter un processus de groupement sur les données de fonctionnement historiques, et éliminer les données anormales sur la base du résultat de groupement du processus de groupement.

3. Procédé selon la revendication 2, dans lequel l'étape consistant à exécuter un processus de groupement sur les données de fonctionnement historiques, comprend les étapes suivantes :

normaliser les données de fonctionnement historiques afin d'acquérir des données de fonctionnement historiques cibles (S401) ;

déterminer une proportion de données de bruit cibles $\varepsilon$-noise, sur la base du nombre d'objets de données dans les données de fonctionnement historiques cibles (S402);

calculer la distance géométrique entre chacun des objets de données, et un objet cible, dans les données de fonctionnement historiques cibles, afin d'acquérir un ensemble de distances (S403), dans lequel l'objet cible est un objet de données dans les données de fonctionnement historiques cibles présentant la $k^{\text{ème}}$ distance géométrique dans l'ordre croissant des distances géométriques entre un objet de données et les objets de données, dans lequel la valeur initiale de k est égale à 2 ;

exécuter des statistiques de probabilité sur des éléments dans l'ensemble de distances, et grouper les éléments dans l'ensemble de distances, qui présentent des valeurs de probabilité dans une plage de probabilité préréglée, en un nouvel ensemble de distances (S404) ;

déterminer une valeur d'espérance mathématique du nouvel ensemble de distances, en tant que valeur d'un paramètre $Eps_k$ d'un algorithme de groupement DBSCAN (S405) ;

déterminer le nombre de points dans un voisinage $Eps_k$ de chacun des objets de données dans les données de fonctionnement historiques cibles, afin d'acquérir un ensemble de nombres (S406) ;

exécuter des statistiques de probabilité sur des éléments dans l'ensemble de nombres, et grouper les éléments dans l'ensemble de nombres, qui présentent des valeurs de probabilité dans une plage de probabilité préréglée, en un nouvel ensemble de nombres (S407) ;

déterminer une valeur d'espérance mathématique du nouvel ensemble de nombres, en tant que valeur d'un paramètre $Minpts_k$ de l'algorithme de groupement DBSCAN (S408) ;

exécuter un processus de groupement DBSCAN sur les données de fonctionnement historiques cibles avec les paramètres $Minpts_k$ et $Eps_k$ (S409) ;

calculer la proportion de données de bruit actuelle $Ratio\text{-}noise_k$, sur la base du résultat de groupement du processus de groupement DBSCAN (S410) ;

mettre fin au processus de groupement, dans le cas où k > 2, et où $Ratio\text{-}noise_k$ satisfait à la relation

$$|Ratio\text{-}noise_{k\text{-}1} - Ratio\text{-}noise_k| \leq \varepsilon\text{-}noise\text{ ;}$$

et

attribuer la valeur k+1 à k, et revenir à l'exécution de l'étape consistant à calculer la distance géométrique entre chacun des objets de données, et un objet cible dans les données de fonctionnement historiques cibles, dans le cas où k ne satisfait pas à k > 2, et / ou où $Ratio\text{-}noise_k$ ne satisfait pas à la relation

$$|Ratio\text{-}noise_{k\text{-}1} - Ratio\text{-}noise_k| \leq \varepsilon\text{-}noise.$$

4. Procédé selon l'une quelconque des revendications 1 à 3, comprenant en outre les étapes suivantes :

acquérir des données de fonctionnement avant une correction de l'ensemble de production cible, avant que la correction ne soit exécutée, et des données de fonctionnement après une correction de l'ensemble de production cible après que la correction ait été exécutée ;

diviser chacune des données de fonctionnement avant une correction, et des données de fonctionnement après une correction, en deux ensembles selon une vitesse nominale du vent ; éliminer les données anormales des deux ensembles de données de fonctionnement avant une correction, et fusionner les deux ensembles de données de fonctionnement avant une correction, desquels les données anormales sont éliminées, afin d'acquérir des données de fonctionnement avant une correction cibles ; et éliminer les données anormales des deux ensembles de données de fonctionnement après une correction, et fusionner les deux ensembles de données de fonctionnement après une correction, desquels les données anormales sont éliminées, afin d'acquérir des données de fonctionnement après une correction cibles ;

faire correspondre une courbe d'énergie éolienne à chacune des données de fonctionnement avant une correction cibles, et des données de fonctionnement après une correction cibles, et exécuter une interpolation linéaire sur la courbe d'énergie éolienne en ce qui concerne la vitesse du vent dans chacune des données de fonctionnement avant une correction cibles, et des données de fonctionnement après une correction cibles, afin d'acquérir une puissance active théorique correspondant à chaque vitesse du vent ;

calculer un écart de puissance entre la puissance active réelle et la puissance active théorique de chaque point de données dans chacune des données de fonctionnement avant une correction cibles, et des données de fonctionnement après une correction cibles, afin d'acquérir l'écart de puissance correspondant à chaque point de données ;

exécuter des statistiques de probabilité sur les écarts de puissance correspondant aux points de données ;

éliminer les points de données, qui présentent des densités de probabilité hors d'une plage préréglée, sur la base du résultat des statistiques de probabilité, et revenir à l'exécution de l'étape consistant à diviser chacune des données de fonctionnement avant une correction, et des données de fonctionnement après une correction, en deux ensembles selon une vitesse du vent nominale, jusqu'à ce que la courbe d'énergie éolienne mise en correspondance, ne change plus ;

convertir la courbe d'énergie éolienne avant que la correction ne soit exécutée, en une valeur quantifiée des performances de sortie avant que la correction ne soit exécutée en exécutant un processus intégral sur la courbe d'énergie éolienne avant que la correction ne soit exécutée, et convertir la courbe d'énergie éolienne après que la correction ait été exécutée, en une valeur quantifiée des performances de sortie après que la correction ait été exécutée en exécutant un processus intégral sur la courbe d'énergie éolienne après que la correction ait été exécutée ; et

comparer la valeur quantifiée des performances de sortie avant que la correction ne soit exécutée, et la valeur quantifiée des performances de sortie après que la correction ait été exécutée, afin d'acquérir une modification à partir des performances de sortie de l'ensemble de production cible avant que la correction ne soit exécutée, vers les performances de sortie de l'ensemble de production cible après que la correction ait été exécutée.

5. Dispositif d'étalonnage automatique d'une erreur d'alignement du vent d'un ensemble de production d'énergie éolienne, comprenant :

un module d'acquisition de données (1401), configuré pour acquérir des données de fonctionnement historiques d'un ensemble de production cible au cours d'une période de temps préréglée ;

un module d'élimination de données (1402), configuré pour éliminer les données anormales des données de fonctionnement historiques acquises par le module d'acquisition de données (1401), afin d'acquérir des données cibles ;

un module de processus de réduction de la dimensionnalité (1403), configuré pour exécuter un processus de réduction de la dimensionnalité sur les données cibles obtenues par le module d'élimination de données (1402) après l'élimination des données anormales ;

dans lequel le module de processus de réduction de la dimensionnalité (1403) comprend :

un module secondaire de statistiques de probabilité, configuré pour exécuter des statistiques de probabilité sur l'erreur d'alignement du vent dans les données cibles, et pour déterminer une plage d'erreur d'alignement du vent cible, sur la base du résultat des statistiques de probabilité ;

un module secondaire d'élimination de données, configuré pour éliminer les données, qui présentent une erreur d'alignement du vent hors de la plage d'erreur d'alignement du vent cible, des données cibles, afin d'acquérir des premières données cibles ;

un module de détermination d'une courbe (1404), configuré pour déterminer une courbe qui représente une relation entre une erreur d'alignement du vent, et les performances de sortie, sur la base des données obtenues par le module de processus de réduction de la dimensionnalité (1403) après l'exécution du processus de réduction de la dimensionnalité, dans lequel le module de détermination d'une courbe (1404) comprend :

un module secondaire de détermination d'une première courbe, configuré pour déterminer une courbe d'énergie éolienne correspondant à chaque erreur d'alignement du vent, sur la base des premières données cibles, dans lequel la courbe d'énergie éolienne est une courbe qui représente une relation entre la vitesse du vent et une puissance active ; et

un module secondaire de détermination d'une seconde courbe, configuré pour transformer la courbe d'énergie éolienne, en une courbe qui représente la relation entre l'erreur d'alignement du vent, et les performances de sortie,

dans lequel le module secondaire de détermination d'une seconde courbe, est configuré en outre pour :

exécuter un processus intégral sur chacune des courbes d'énergie éolienne correspondant à différentes erreurs d'alignement du vent, afin d'acquérir une valeur quantifiée des performances de sortie, et

acquérir la courbe qui représente une relation entre l'erreur d'alignement du vent et les performances de sortie ;

un module de détermination d'erreur d'alignement du vent inhérente (1405), configuré pour déterminer une erreur d'alignement du vent inhérente, sur la base de la courbe qui représente la relation entre l'erreur d'alignement du vent et les performances de sortie, déterminée par le module de détermination d'une courbe (1404), dans lequel l'erreur d'alignement du vent inhérente représente l' angle entre la position zéro d'une girouette et l'axe d'une nacelle ; et

un module de correction (1406), configuré pour corriger un paramètre de position zéro d'un système de lacet de l'ensemble de production cible, sur la base de l'erreur d'alignement du vent inhérente déterminée par le module de détermination d'erreur d'alignement du vent inhérente (1405).

6. Dispositif selon la revendication 5, dans lequel le module d'élimination de données (1402) comprend :

un module de groupement, configuré pour exécuter un processus de groupement sur les données de fonctionnement historiques, afin d'acquérir un résultat de groupement ; et un module d'élimination, configuré pour éliminer les données anormales sur la base du résultat de groupement du processus de groupement.

7. Dispositif selon la revendication 5 ou 6, comprenant en outre :

un module secondaire d'acquisition de données, configuré pour acquérir des données de fonctionnement avant une correction de l'ensemble de production cible, avant que la correction ne soit exécutée, et des données de fonctionnement après une correction de l'ensemble de production cible après que la correction ait été exécutée ;

un module secondaire de division de données, configuré pour diviser chacune des données de fonctionnement avant une correction, et des données de fonctionnement après une correction, en deux ensembles selon une vitesse nominale du vent ;

un module secondaire d'élimination de données anormales, configuré pour éliminer les données anormales des deux ensembles de données de fonctionnement avant une correction, et pour éliminer les données anormales des deux ensembles de données de fonctionnement après une correction ;

un module secondaire de fusion de données, configuré pour fusionner les deux ensembles de données de fonctionnement avant une correction, desquels les données anormales sont éliminées, afin d'acquérir des données de fonctionnement avant une correction cibles, et pour fusionner les deux ensembles de données de fonctionnement après une correction, desquels les données anormales sont éliminées, afin d'acquérir des données de fonctionnement après une correction cibles ;

un module secondaire d'ajustement de données, configuré pour faire correspondre une courbe d'énergie éolienne à chacune des données de fonctionnement avant une correction cibles, et des données de fonctionnement après une correction cibles ;

un module secondaire d'interpolation de données, configuré pour exécuter une interpolation linéaire sur la courbe d'énergie éolienne en ce qui concerne une vitesse du vent, dans chacune des données de fonctionnement avant une correction cibles, et des données de fonctionnement après une correction cibles, afin d'acquérir une puissance active théorique correspondant à chaque vitesse du vent ;

un module secondaire de calcul d'écart de puissance, configuré pour calculer un écart de puissance entre une puissance active réelle et la puissance active théorique de chaque point de données dans chacune des données de fonctionnement avant une correction cibles, et des données de fonctionnement après une correction cibles, afin d'acquérir l'écart de puissance correspondant à chaque point de données ; dans lequel le module secondaire d'élimination de données anormales, est configuré en outre pour: exécuter des statistiques de probabilité sur les écarts de puissance correspondant aux points de données ; éliminer les points de données, qui présentent des densités de probabilité hors d'une plage préréglée, sur la base du résultat des statistiques de probabilité, afin d'acquérir de nouvelles données de fonctionnement avant une correction, et de nouvelles données de fonctionnement après une correction ; et déclencher ensuite le module secondaire de division de données, afin de diviser les données de fonctionnement avant une correction, en deux ensembles selon une vitesse du vent nominale, jusqu'à ce que la courbe de puissance éolienne mise en correspondance, ne change plus ; dans lequel le module d'évaluation comprend en outre :

un module secondaire de traitement d'une courbe d'énergie éolienne, configuré pour convertir la courbe d'énergie éolienne avant que la correction ne soit exécutée, en une valeur quantifiée des performances de sortie avant que la correction ne soit exécutée, en exécutant un processus intégral sur la courbe d'énergie éolienne avant que la correction ne soit exécutée, et pour convertir la courbe d'énergie éolienne après que la correction est été exécutée, en une valeur quantifiée des performances de sortie après que la correction ait été exécutée, en exécutant un processus intégral sur la courbe d'énergie éolienne après que la correction ait été exécutée ; et un module secondaire de comparaison, configuré pour comparer la valeur quantifiée des performances de sortie avant que la correction ne soit exécutée, et la valeur quantifiée des performances de sortie après que la correction ait été exécutée, afin d'acquérir une modification à partir des performances de sortie de l'ensemble de production cible avant que la correction ne soit exécutée, vers les performances de sortie de l'ensemble de production cible après que la correction ait été exécutée.

$\beta$   $\alpha$   $\alpha_0$

Wind vane

Nacelle

Wheel hub     Blade

**Figure 1**

```
                    ┌───────────────────┐
                    │       Start        │
                    └───────────────────┘
                              │
                              ▼
        ┌──────────────────────────────────────────┐        S201
        │ Acquire historical operation data of a     │
        │ target generator set within a preset time  │
        │                period                      │
        └──────────────────────────────────────────┘
                              │
                              ▼
        ┌──────────────────────────────────────────┐        S202
        │ Remove abnormal data from the historical   │
        │ operation data of the target generator set │
        └──────────────────────────────────────────┘
                              │
                              ▼
        ┌──────────────────────────────────────────┐        S203
        │ Perform a dimensionality reduction process │
        │ on the target data, and determine a curve  │
        │ representing a relationship between a wind  │
        │ alignment error and an output performance  │
        │ based on the data obtained by the          │
        │ dimensionality reduction process           │
        └──────────────────────────────────────────┘
                              │
                              ▼
        ┌──────────────────────────────────────────┐        S204
        │ Determine an inherent wind alignment error │
        │ based on the curve representing the        │
        │ relationship between the wind alignment    │
        │ error and the output performance           │
        └──────────────────────────────────────────┘
                              │
                              ▼
                    ┌───────────────────┐
                    │        End         │
                    └───────────────────┘
```

**Figure 2**

Start

Acquire historical operation data of a target generator set within a preset time period — S301

Remove abnormal data from the historical operation data of the target generator set to acquire target data — S302

Perform a dimensionality reduction process on the target data, and determine a curve representing a relationship between a wind alignment error and an output performance based on the data obtained by the dimensionality reduction process — S303

Determine an inherent wind alignment error based on the curve representing the relationship between the wind alignment error and the output performance — S304

Evaluate, based on an operation data deep purification technique, a change from the output performance of the target generator set before the correcting is performed to the output performance of the target generator set after the correcting is performed — S305

End

**Figure 3**

```
                              ┌────────────┐
                              │   Start    │
                              └─────┬──────┘
                                    ▼
┌──────────────────────────────────────────────────────────┐
│ Standardize the historical operation data to acquire      │── S401
│ target historical operation data                          │
└──────────────────────────┬───────────────────────────────┘
                           ▼
┌──────────────────────────────────────────────────────────┐
│ Determine a target noise data proportion ε-noise based    │── S402
│ on the number of data objects in the target historical    │
│ operation data                                            │
└──────────────────────────┬───────────────────────────────┘
                           ▼
┌──────────────────────────────────────────────────────────┐
│ Calculate a geometric distance between each of the data   │── S403
│ objects and a target object in the target historical      │
│ operation data to acquire a distance set                  │
└──────────────────────────┬───────────────────────────────┘
                           ▼
┌──────────────────────────────────────────────────────────┐
│ Perform probability statistics on elements in the         │── S404
│ distance set, and group the elements in the distance set, │
│ which have probability values within a preset probability │
│ range, into a new distance set                            │
└──────────────────────────┬───────────────────────────────┘
                           ▼
┌──────────────────────────────────────────────────────────┐
│ Determine a mathematical expectation value of the new     │── S405
│ distance set as a value of a parameter Eps_k of a DBSCAN  │
│ clustering algorithm                                      │
└──────────────────────────┬───────────────────────────────┘
                           ▼
┌──────────────────────────────────────────────────────────┐
│ Determine the number of points in an Epsk neighborhood    │── S406
│ of each of the data objects in the target historical      │
│ operation data, to acquire a number set                   │
└──────────────────────────┬───────────────────────────────┘
                           ▼
┌──────────────────────────────────────────────────────────┐
│ Perform probability statistics on elements in the number  │── S407
│ set, and group the elements in the number set, which have │
│ probability values within a preset probability range,     │
│ into a new number set                                     │
└──────────────────────────┬───────────────────────────────┘
                           ▼
┌──────────────────────────────────────────────────────────┐
│ Determine a mathematical expectation value of the new     │── S408
│ number set as a value of a parameter Minpts_k of the      │
│ DBSCAN clustering algorithm                               │
└──────────────────────────┬───────────────────────────────┘
                           ▼
┌──────────────────────────────────────────────────────────┐
│ Perform a DBSCAN clustering process on the target         │── S409
│ historical operation data with the parameters Minptsk     │
│ and Epsk                                                  │
└──────────────────────────┬───────────────────────────────┘
                           ▼
┌──────────────────────────────────────────────────────────┐
│ Calculate a current noise data proportion Ratio-noise_k   │── S410
│ based on a clustering result of the DBSCAN clustering      │
│ process                                                   │
└──────────────────────────┬───────────────────────────────┘
```

Assign k+1 to k

Determine whether k is greater than 2 and Ratio-noisek meets $\left| Ratio\text{-}noise_{k-1} - Ratio\text{-}noise_k \right| \leq \varepsilon\text{-}noise$ — S411

No

Yes

End

**Figure 4**

**Figure 5**

```
                    ┌─────────────┐
                    │    Start    │
                    └─────────────┘
                           │
                           ▼
    ┌──────────────────────────────────────────────┐
    │ Perform probability statistics on the wind     │      S601
    │ alignment error in the target data, and        │
    │ determine a target wind alignment              │
    │ error range based on a result of the           │
    │ probability statistics                         │
    └──────────────────────────────────────────────┘
                           │
                           ▼
    ┌──────────────────────────────────────────────┐
    │ Remove data, which has a wind alignment        │      S602
    │ error out of the target wind alignment         │
    │ error range, from the target data to           │
    │ acquire first target data                      │
    └──────────────────────────────────────────────┘
                           │
                           ▼
    ┌──────────────────────────────────────────────┐
    │ Determine a wind power curve corresponding     │      S603
    │ to each wind alignment error based on the      │
    │ first target data                              │
    └──────────────────────────────────────────────┘
                           │
                           ▼
    ┌──────────────────────────────────────────────┐
    │ Process the wind power curve into the curve    │      S604
    │ representing the relationship between the       │
    │ wind alignment error and the output            │
    │ performance                                    │
    └──────────────────────────────────────────────┘
                           │
                           ▼
                    ┌─────────────┐
                    │     End     │
                    └─────────────┘
```

**Figure 6**

**Figure 7**

**Figure 8**

**Figure 9**

**Figure 10**

(a)                                              (b)

**Figure 11**

**Figure 12**

**Figure 13**

**Figure 14**

Device for automatically calibrating a wind
alignment error of a wind generation unit

Data acquiring module — 1401

Data removing module — 1402

Dimensionality reduction
process module — 1403

Curve determining module — 1404

Inherent wind alignment error
determining module — 1405

Correcting module — 1406

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610579606
- WO 2016086778 A1